(19) Europäisches Patentamt
European Patent Office
Office européen des brevets

(11) Veröffentlichungsnummer : **0 035 283**
**B1**

(12) # EUROPÄISCHE PATENTSCHRIFT

(45) Veröffentlichungstag der Patentschrift : **15.05.85**

(51) Int. Cl.[4] : **F 16 D 3/60**, F 16 D 3/62

(21) Anmeldenummer : **81102035.3**

(22) Anmeldetag : **25.02.81**

(54) **Wellenkupplung.**

**Verbunden mit 81900523.2 (europäische Anmeldenummer) durch Entscheidung vom 10.02.83.**

(30) Priorität : **27.02.80 DE 3007348**
**26.04.80 DE 3016267**
**28.08.80 DE 3032373**

(43) Veröffentlichungstag der Anmeldung : **09.09.81 Patentblatt 81/36**

(45) Bekanntmachung des Hinweises auf die Patenterteilung : **15.05.85 Patentblatt 85/20**

(84) Benannte Vertragsstaaten :
**CH DE FR GB IT LI SE**

(56) Entgegenhaltungen :
**DE-A- 2 520 947**
**FR-A- 856 273**
**FR-A- 1 427 840**
**FR-A- 1 486 346**
**US-A- 4 033 144**
**US-A- 4 187 699**

(73) Patentinhaber : **Chivari, Ilie**
**Berliner Strasse 1**
**D-4690 Herne 2 (DE)**

(72) Erfinder : **Chivari, Ilie**
**Berliner Strasse 1**
**D-4690 Herne 2 (DE)**

(74) Vertreter : **Weisse, Jürgen, Dipl.-Phys.**
**Bökenbusch 41 Postfach 11 03 86**
**D-5620 Velbert 11-Langenberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 035 283 B1

**Beschreibung**

Die Erfindung betrifft eine Wellenkupplung, welche einen Knickwinkel zwischen den zu kuppelnden Teilen zuläßt, mit einer ersten Kupplungshälfte, einer zweiten Kupplungshälfte und einem Zwischenglied zwischen der ersten und der zweiten Kupplungshälfte bei welcher die erste Kupplungshälfte mit dem Zwischenglied durch eine erste Lenkeranordnung verbunden ist, die ein Paar von diametral einander gegenüberliegenden sich von dem Zwischenglied aus jeweils im gleichen Sinn im wesentlichen im Umfangsrichtung erstreckenden, allseits beweglich angelenkten Lenkern aufweist und die zweite Kupplungshälfte mit dem Zwischenglied durch eine zweite Lenkeranordnung verbunden ist, die ein Paar von diametral einander gegenüberliegenden sich von dem Zwischenglied aus jeweils im gleichen Sinn im wesentlichen in Umfangsrichtung erstreckenden, in axialem Abstand von der ersten Lenkeranordnung allseits beweglich angelenkten Lenkern aufweist.

Eine solche Wellenkupplung ist bekannt durch die FR-A-1 427 840.

Durch die FR-A-1 427 840 ist eine Wellenkupplung zum Antrieb der treibenden Achse eines Schienenfahrzeugs bekannt. Bei dieser bekannten Anordnung ist die Achse durch ein Lager eines Antriebszahnrads hindurchgeführt. Die Achse ist von einer Hohlwelle umgeben, die ein « Zwischenglied » der Wellenkupplung bildet. Die Hohlwelle ist durch eine erste Lenkeranordnung mit einer an dem Antriebszahnrad angebrachten Platte verbunden, welche eine erste Kupplungshälfte der Wellenkupplung bildet. Durch eine zweite Lenkeranordnung ist die Hohlwelle mit einem der auf der Achse sitzenden Räder verbunden. Dieses Rad bildet die zweite Kupplungshälfte der Wellenkupplung.

Bei der bekannten Anordnung enthält jede der Lenkeranordnungen ein Paar von diametral einander gegenüberliegenden, sich von dem Zwischenglied aus jeweils im gleichen Sinn im wesentlichen in Umfangsrichtung erstreckenden, allseits beweglich angelenkten Lenkern. Es sind dort zwei derartige Paare für jede Lenkeranordnung vorgesehen, die sich von dem Zwischenglied aus in entgegengesetzten Richtungen erstrecken.

Die Lenker des einen Paares erstrecken sich von dem Zwischenglied aus in entgegengesetzter Umfangsrichtung zu den Lenkern des anderen Paares. Jeweils ein Lenker des einen Paares ist neben einem Lenker des anderen Paares an dem Zwischenglied angelenkt. Die Anlenkung erfolgt über Gummilager. In entsprechender Weise sind die Lenker an der ersten bzw. der zweiten Kupplungshälfte angelenkt.

Die Lenker der ersten Lenkeranordnung sind bei der bekannten Anordnung winkelversetzt gegen die Lenker der zweiten Lenkeranordnung an dem Zwischenglied angelenkt.

Die beiden Lenkeranordnungen der bekannten Wellenkupplung sollen eine begrenzte Winkelbewegung zwischen den Kupplungshälften und dem als Hohlwelle ausgebildeten Zwischenglied ermöglichen. Dadurch wird ein begrenzter Radialversatz zwischen dem Antriebszahnrad einerseits und der Achse mit den Rädern andererseits ermöglicht.

Die bekannte Wellenkupplung gestattet eine Winkelbewegung zwischen Kupplungshälften und Zwischenglied nicht durch die Kinematik des Systems sondern nur in dem Umfang, in dem die Gummilager nachgeben. Ein Radialversatz wird nur durch die Länge der Hohlwelle ermöglicht.

Bei einer anderen bekannten Wellenkupplung (US-A-4 040 270, Fig. 12 und 13) sind drei Zwischenglieder in Form zueinander konzentrischer und drehbeweglich aufeinander gelagerten Ringe vorgesehen. Jeder dieser Ringe ist über einen einzigen Lenker mit der ersten Kupplungshälfte und über einen anderen, dem ersten Lenker diametral gegenüberliegenden Lenker mit der zweiten Kupplungshälfte verbunden, die den drei Zwischengliedern zugeordneten Lenkerpaare sind in der Ruhestellung, d. h. wenn die beiden zu kuppelnden Wellen miteinander fluchten, um 120° gegeneinander winkelversetzt. Die Lenker sind dort über Kugelgelenke allseits beweglich an den Kupplungshälften bzw. an den Zwischengliedern angelenkt. Bei einer anderen Ausführungsform der Kupplung nach US-PS 4 040 270 (Fig. 14) erfolgt die allseits bewegliche Anlenkung über Gummikörper.

Die Kupplung nach der US-PS 4 040 270 gestattet in kinematisch einwandfreier Weise bei winkeltreuer Übertragung der Drehbewegung von einer Welle auf die andere einen Radialversatz der Wellen. Die allseits bewegliche Anlenkung der Lenker läßt auch einen Knickwinkel zwischen den Achsen der zu kuppelnden Wellen zu.

Bei dieser bekannten Kupplung erfolgt die Drehmomentübertragung von der einen Kupplungshälfte über einen Lenker, den Ring und den auf der anderen Seite des Ringes angeordneten anderen Lenker auf die andere Kupplungshälfte. Dabei ist für die Kinematik und die Drehmomentübertragung wesentlich, daß drei Ringe drehbar aufeinander gelagert sind. Das erfordert in der Praxis eine relativ aufwendige Lagerung.

Eine andere bekannte Wellenkupplung mit einem Zwischenglied, das mit der antriebsseitigen und der abtriebsseitigen Kupplungshälfte über je eine Lenkeranordnung verbunden ist, ist Gegenstand der FR-A-1 475 431. Bei dieser bekannten Wellenkupplung besteht jede Lenkeranordnung aus drei um jeweils 120° gegeneinander winkelversetzten Lenkern. Die antriebsseitige Kupplungshälfte ist ein topfförmiger Körper, an dessen Rand die drei Lenker einen Lenkeranordnung angelenkt sind. Das Zwischenglied ist ein Ring, der innerhalb des topfförmigen Körpers sitzt und mit diesem über die Lenker verbunden ist. Die Lenker erstrecken sich im wesentlichen in Umfangsrichtung. Sie sind über Gummikalotten allseits beweglich angelenkt. Der das Zwischenglied bildende Ring ist mit der scheibenförmigen, innerhalb des Ringes angeordneten abtriebsseitigen Kupplungshälfte ebenfalls über drei um 120° gegeneinander versetzte, sich im wesentlichen in Umfangsrichtung erstreckende Lenker miteinander verbunden.

Diese bekannte Kupplung gestattet keinen Radialversatz. Die Übertragung einer Drehbewegung bei einem Knickwinkel zwischen antriebsseitiger und abtriebsseitiger Umlaufachse ist nur näherungsweise homokinetisch.

Der Erfindung liegt die Aufgabe zugrunde, eine konstruktiv einfach aufgebaute Wellenkupplung zu schaffen, welche in kinematisch einwandfreier Weise bei homokinetischer Übertragung der Drehbewegung einen Knickwinkel zwischen den Umlaufachsen der zu kuppelnden Teile zuläßt.

Erfindungsgemäß wird diese Aufgabe dadurch gelöst, daß

(a) die Lenkeranordnung zwischen erster Kupplungshälfte und Zwischenglied und die Lenkeranordnung zwischen Zwischenglied und zweiter Kupplungshälfte je nur ein einziges Paar von diametral einander gegenüberliegenden Lenkern aufweisen und

(b) jeweils ein Lenker der einen Lenkeranordnung gleichachsig mit einem Lenker der anderen Lenkeranordnung an dem Zwischenglied angelenkt ist.

Die erfindungsgemäße Wellenkupplung gestattet eine kinematisch einwandfreie, homokinetische Übertragung der Drehbewegung auch bei einem Knickwinkel zwischen den Umlaufachsen der zu kuppelnden Teile. Bei einem solchen Knickwinkel entfernen sich die Kupplungshälften auf der einen Seite weiter voneinander, während sie sich auf der gegenüberliegenden Seite einander stärker annähern. Diese Abweichungen werden dadurch ausgeglichen, daß die Lenker sich mit ihren an den Kupplungshälften angelenkten Enden aus ihrer Radialebene nach außen bzw. nach innen herausbewegen. Dabei tritt in der Axialprojektion eine Verkürzung der Lenker ein. Dieser « Verkürzung » wird durch eine Schwenkbewegung der Lenker und des Zwischenglieds Rechnung getragen. Es bleibt somit auch bei Auftreten eines Knickwinkels die winkeltreue Übertragung der Drehbewegung erhalten.

Im Gegensatz zu der Kupplung nach der US-PS 4 040 270 ist bei der Wellenkupplung nach der Erfindung auf beiden Seiten des Zwischenglieds über die axial fluchtenden Lenker jeweils eine unmittelbare Verbindung zwischen den Kupplungshälften hergestellt. Bei jedem Zwischenglied erfolgt eine Drehmomentübertragung über zwei parallel wirkende Lenker.

Es sind keine besonderen Vorkehrungen zur Lagerung von Ringen aufeinander erforderlich, wie daß bei der US-A-4 040 270 der Fall ist.

Die Kupplung gemäß der Erfindung gestattet auch eine homokinetische Übertragung der Drehbewegung bei einem zusätzlich zu einem Knickwinkel auftretenden Radial- und Axialversatz der Wellen. Bei einem derartigen Versatz erfolgt eine Aufgleichsbewegung des Zwischengliedes in Form einer Schwenkbewegung des Zwischengliedes um eine zu seiner Längsrichtung senkrechte Querachse.

Es kann ein einziges Zwischenglied vorgesehen sein, welches nicht formschlüssig, sondern mittels Federn zentriert gehalten wird. Bei der Übertragung von Drehmomenten wirkt auf das Zwischenglied eine zentrierende Kraftkomponente. Bei geringen Drehmomenten und hohen Drehzahlen kann jedoch das Zwischenglied durch die Fliehkraft radial nach außen gezogen werden. Die Erfindung sieht daher bei einigen Ausführungsformen zwei gegeneinander winkelversetzte Zwischenglieder vor, die durch eine zentrale Achse drehbeweglich miteinander verbunden sind. Auf diese Weise erfolgt eine Zentrierung beider Zwischenglieder. Dabei können aber die Zwischenglieder nicht aus ihrer Radialebene herausgeschwenkt werden. Infolgedessen gestattet eine solche Wellenkupplung zwar den Ausgleich eines Knickwinkels zwischen den Wellenachsen, nicht aber den Ausgleich eines Radialversatzes.

Um die Wellenkupplung so auszubilden, daß einerseits eine Zentrierung jedes Zwischengliedes gewährleistet ist und andererseits durch die Wellenkupplung sowohl ein Knickwinkel als auch ein Radial- und Axialversatz ausgeglichen werden kann, ist bei einigen Ausführungen das Zwischenglied über ein allseits bewegliches Gelenk auf einer sowohl eine Verdrehung um die Umlaufachse als auch eine Neigung des Zwischengliedes gegen eine Radialebene zulassenden Weise gegen radiale Verlagerung gesichert.

Diese Weiterbildung der Erfindung beinhaltet somit eine formschlüssige Zentrierung des Zwischengliedes. Diese Zentrierung erfolgt über ein allseits bewegliches Gelenk, so daß das Zwischenglied nicht nur eine Drehbewegung um die Umlaufachse sondern auch eine Schwenkbewegung aus seiner Radialebene heraus ausführen und somit sowohl die für einen Knickwinkel als auch die für einen Radialversatz erforderliche Ausgleichsbewegungen ausführen kann.

Weitere Ausgestaltungen der Erfindung sind Gegenstand von Unteransprüchen.

Einige Ausführungsbeispiele der Erfindung sind nachstehend unter Bezugnahme auf die zugehörigen Zeichnungen näher erläutert :

Figur 1 zeigt einen Querschnitt einer Wellenkupplung längs der Linie C-D von Fig. 2.

Figur 2 zeigt einen Längsschnitt der Wellenkupplung längs der Linie A-B von Fig. 1.

Figur 3 zeigt eine Ansicht einer vereinfachten Wellenkupplung, in der Richtung des Pfeiles K von Fig. 4 gesehen.

Figur 4 zeigt einen Schnitt längs der Linie G-H von Fig. 3.

Figur 5 zeigt eine Ausführungsform der Erfindung mit zwei Zwischenstücken und einer dazwischen liegenden Lagerkugel in einem Schnitt längs der Linie C-D in Fig. 6.

Figur 6 zeigt einen Schnitt längs der Linie A-B in Fig. 5.

Figur 7 zeigt eine Kreuzung der beiden Zwischenstücke mit der dazwischen liegenden Lagerkugel bei einer abgewandelten Ausführungsform in einem Schnitt längs der Linie G-H in Fig. 8.

Figur 8 zeigt einen Schnitt der Linie E-F in Fig. 7.

Figur 9 zeigt die Kreuzung der beiden Zwischenstücke bei einer weiteren Ausführungsform.

Figur 10 zeigt eine Ausführungsform mit einem einzigen Zwischenstück, das an den beiden Kupplungshälften zentriert ist, in einem Längsschnitt längs der Linie K-L in Fig. 11.

Figur 11 zeigt einen Schnitt längs der Linie I-J in Fig. 10.

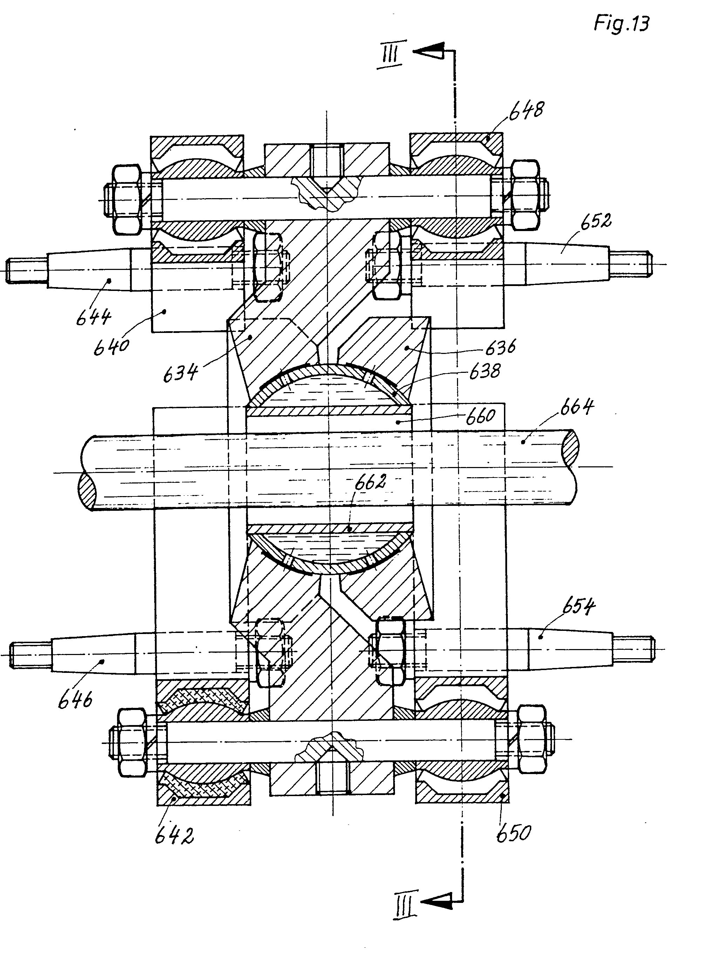

Figur 12 zeigt teilweise geschnitten längs der Linie III-III von Fig. 13 eine Wellenkupplung mit zwei aneinander zentrierten Zwischengliedern, welche den Durchtritt einer durchgehenden Welle gestattet.

Figur 13 zeigt einen Schnitt längs der Linie IV-IV von Fig. 12.

Die Kupplung von Fig. 1 und 2 enthält eine erste Kupplungshälfte 10 und eine zweite Kupplungshälfte 12. Die erste Kupplungshälfte 10 enthält beim dargestellten Ausführungsbeispiel eine Nabe 14 mit einem Flansch 16. Ebenso die zweite Kupplungshälfte 12 eine Nabe 18 und einen dem Flansch 16 zugewandten Flansch 20. Zwischen den Kupplungshälften 10 und 12 sitzen zwei Zwischenglieder 22 und 24. Das Zwischenglied 22 ist ein langgestreckter Teil, der sich (in der Ruhestellung bei fluchtenden Wellen) senkrecht zur Umlaufachse 26 erstreckt und in der Mitte eine Kröpfung 28 aufweist. Das Zwischenglied 24 ist ebenfalls ein langgestreckter Teil, der sich gekreuzt zu dem Zwischenglied 22 senkrecht zur Umlaufachse 26 erstreckt und in der Mitte eine Kröpfung 30 entgegengesetzt zur Kröpfung 28 aufweist. Die Zwischenglieder 22 und 24 greifen mit den Kröpfungen 28 bzw. 30 umeinander, so daß ihre Enden, z. B. 32 und 34, in einer gemeinsamen Ebene liegen.

An dem Flansch 16 sitzen vier Zapfen, von denen in Fig. 2 nur zwei Zapfen 36 und 38 zu sehen sind. Die Zapfen 36 und 38 liegen hinter der Papierebene von Fig. 2, die durch die Linie A-B in Fig. 1 wiedergegeben wird. Zwei weitere Zapfen liegen symmetrisch zu den Zapfen 36 und 38 vor der Papierebene. Die Anordnung ist praktisch die gleiche, wie sie in Fig. 1 für die zweite Kupplungshälfte 12 dargestellt ist. Der Flansch 20 der zweiten Kupplungshälfte 12 trägt vier Zapfen 40, 42, 44, 46 (Fig. 1), von denen in Fig. 2 die Zapfen 42 und 46 sichtbar sind. Die beiden weiteren Zapfen der ersten Kupplungshälfte 10 fluchten mit den Zapfen 40 und 44. Jeder der Zapfen 36, 38, der beiden nicht sichtbaren weiteren Zapfen und der Zapfen 40, 42, 44, 46 weist eine kugelförmige Wulst 48 auf.

An den Enden, z. B. 32 und 34, der Zwischenglieder 22 und 24 sitzen auf beiden Seiten Paare von fluchtenden Zapfen. In Fig. 2 sind das Paar von Zapfen 50, 52 am Ende 32 des Zwischenglieds 22 und das Paar 54, 56 am Ende 34 des Zwischenglieds 24 sichtbar. An den gegenüberliegenden Enden der Zwischenglieder 22 und 24 sitzen in gleicher Weise die Paare von fluchtenden Zapfen 58, 60 bzw. 62, 64, wobei angenommen ist, daß die Zapfen 58 und 62 auf die erste Kupplungshälfte 10 hin gerichtet sind. Die Zapfen 50, 52, 54, 56, 58, 60, 62 und 64 weisen an ihren Enden je eine sphärische Wulst 66 auf, die in der gleichen Radialebene liegt wie die sphärische Wulst 48 am Zapfen der benachbarten Kupplungshälfte.

Das Zwischenglied 22 ist mit der ersten Kupplungshälfte 10 durch eine Lenkeranordnung von zwei diametral einander gegenüberliegenden, allseits beweglich angelenkten Lenkern, nämlich dem Lenker 68 (Fig. 2) und einem in Fig. 2 nicht sichtbaren, mit dem Lenker 70 in Fig. 1 fluchtenden Lenker verbunden. Die diametral einander gegenüberliegenden Lenker erstrecken sich von dem Zwischenglied 22 aus jeweils im gleichen Drehsinn, nämlich entgegen dem Uhrzeigersinn, in Umfangsrichtung. Das Zwischenglied 22 ist weiterhin mit der zweiten Kupplungshälfte 12 über eine zweite Lenkeranordnung von zwei diametral einander gegenüberliegenden, allseits beweglich angelenkten Lenkern 70 und 72 verbunden. Dabei fluchtet in Axialrichtung gesehen jeweils ein Lenker des einen Paares mit einem Lenker des anderen Paares, d. h. beispielsweise fluchtet der Lenker 68 mit dem Lenker 72. In ähnlicher Weise ist das zweite Zwischenglied 24 mit der ersten Kupplungshälfte 10 über eine Lenkeranordnung von zwei diametral einander gegenüberliegenden Lenkern, nämlich dem Lenker 74 in Fig. 2 und einem in den Figuren nicht sichtbaren, mit dem Lenker 76 von Fig. 1 fluchtenden Lenker, verbunden. Das zweite Zwischenglied 24 ist mit der zweiten Kupplungshälfte 12 über eine zweite Lenkeranordnung verbunden, die aus den diametral einander gegenüberliegenden, allseits beweglich angelenkten Lenkern 76 und 78 besteht. Auch hier erstrecken sich die diametral einander gegenüberliegenden Lenker von dem Zwischenglied 24 aus im gleichen Drehsinn, nämlich im Uhrzeigersinn, in Umfangsrichtung. Auch hier fluchtet in Axialrichtung gesehen jeweils ein Lenker des einen Paares mit einem Lenker des anderen Paares, also beispielsweise der Lenker 74 mit dem Lenker 78.

Die beiden Zwischenglieder 22 und 24 sind durch einen Bolzen 80 um eine zentrale Achse, die in der dargestellten Ruhestellung mit der Umlaufachse 26 zusammenfällt, drehbeweglich miteinander verbunden.

Die Lenker 68, 70, 72, 74, 76, 78 usw. sind jeweils über Gummikalotten allseits beweglich mit den Kupplungshälften 10, 12 bzw. den Zwischengliedern 22, 24 verbunden. Die Art der Verbindung ist nachstehend anhand der Lenkers 72 näher beschrieben. Die übrigen Lenker sind in gleicher Weise ausgebildet.

Der Lenker 72 weist ein brillenförmiges Gehäuses 81 auf, das zwei zylindrische Kammern 82 und 84 bildet. Das Gehäuse 81 bildet auf einer Seite radial nach innen vorstehende Rände 86, 88, welche die ansonsten durchgehenden Kammern 82 bzw. 84 unter Freilassung von Öffnungen 90 bzw. 92 begrenzen. Durch die Öffnung 92 ragt der Zapfen 52 des Zwischenglieds 22 in die Kammer 84 hinein, so daß die sphärische Wulst 66 zentral in der Kammer 84 sitzt. Von der anderen Seite her ragt der Zapfen 42 der zweiten Kupplungshälfte 12 in die Kammer 82, so daß die sphärische Wulst 48 des Zapfens 42 zentral in der Kammer 82 und in der gleichen Radialebene wie die Wulst 66 des Zapfens 52 sitzt. Eine Gummikalotte 94 sitzt in der Kammer 82 in dem Ringraum zwischen der Wandung der Kammer 82 und der sphärischen Wulst 48. Sie ist in diesen Ringraum eingepreßt und liegt auf einer Seite an dem Rand 86 an, während sie auf der anderen Seite durch einen Ring 96 gehalten wird, der durch einen Sprengring 98 gesichert ist. In ähnlicher Weise ist eine Gummikalotte 100 in der Kammer 84 in dem Ringraum zwischen der Wandung der Kammer 84 und der sphärischen Wulst 66 vorgesehen.

Über diese Gummikalotten 94 und 100 und die Zapfen 42 bzw. 52 ist der Lenker 72 elastich und allseits beweglich an der Kupplungshälfte 12 bzw. dem Zwischenglied 22 angelenkt.

Die beschriebene Anordnung arbeitet wie folgt :

Beim Antrieben der ersten Kupplungshälfte 10 erfolgt die Kraftübertragung z. B. über den Zapfen 36, den Lenker 68, den Zapfen 50, den damit fluchtenden Zapfen 52, den mit dem Lenker 68 in Axialrichtung gesehen fluchtenden Lenker 72 und den Zapfen 42 auf die zweite Kupplungshälfte 12. In entsprechender Weise wird die Kraft am entgegengesetzten Ende des Zwischenglieds 22 direkt über die Zapfen 58, 60, Lenker 70 und Zapfen 44 auf die zweite Kupplungshälfte 12 übertragen. Das Zwischenglied 22 wird dabei auf Torsion um einen Radius 102 beansprucht. In gleicher Weise erfolgt eine direkte Kraftübertragung über die mit dem Zwischenglied 24 verbundenen Lenker, z. B. 74 und 78.

Der Zapfen 80 verhindert eine Unstabilität, die infolge der Fliehkraft bei unbelasteter Wellenkupplung eintreten könnte, wenn sich ein Zwischengleid 22 oder 24 aus seiner Mittelstellung herausbewegt.

Bei einem Knickwinkel zwischen der Umlaufachse der ersten Kupplungshälfte 10 und der Umlaufachse der zweiten Kupplungshälfte 12, durch welchen beispielsweise die zweite Kupplungshälfte 12 in Fig. 2 etwas im Uhrzeigersinn verschwenkt ist, sind die Flansche 16 und 20 im oberen Teil von Fig. 2 etwas weiter auseinandergezogen, während sie sich im unteren Teil von Fig. 2 stärker einander nähern, als dies in der dargestellten Ruhestellung der Fall ist. Das wird durch eine Schwenkbewegung der Lenker in der Papierebene von Fig. 2 ausgeglichen : Oben schwenkt Lenker 68 entgegen dem Uhrzeigersinn, und Lenker 72 schwenkt im Uhrzeigersinn. Unten schwenkt Lenker 74 entgegen dem Uhrzeigersinn, und Lenker 78 schwenkt im Uhrzeigersinn, und zwar im gleichen Maße wie die oberen Lenker 68, 72. Um sich diesen Vorgang zu veranschaulichen ist zu beachten, daß Fig. 2 eine « Momentaufnahme » darstellt und die Lenkerpaare 68, 72 und 74, 78 nach einer 180°-Drehung ihre Funktionen vertauschen. Es ist weiter zu beachten, daß die Lenker sich nicht radial erstrecken, wie aus Fig. 1 erkennbar ist.

Durch die Verschwenkung der Lenker in der Papierebene von Fig. 2 würde eine scheinbare Verkürzung der Lenker bei Betrachtung in Axialrichtung, d. h. in der Darstellung von Fig. 1 stattfinden. Dieser Verkürzung wird durch eine Schwenkbewegung des Zwischenglieds 22 oder 24 und des Lenkers in Fig. 1 Rechnung getragen. Wenn beispielsweise der Lenker 72 in Fig. 2 im Uhrzeigersinn verschwenkt wird und sich dadurch in Längsrichtung gesehen, also in der Darstellung von Fig. 1, verkürzt, dann wird dieser scheinbaren Verkürzung durch eine Schwenkbewegung des Zwischenglieds 22 entgegen dem Uhrzeigersinn in Fig. 1 Rechnung getragen, d. h. der Zapfen 52 nähert sich in Umfangsrichtung dem Zapfen 42. Der entgegen dem Uhrzeigersinn verschwenkte Lenker 68 erfährt die gleiche scheinbare Verkürzung, die in gleicher Weise durch die Schwenkbewegung des Zwischengliedes 22 ausgeglichen wird. Der Zapfen 50 nähert sich dabei Umfangsrichtung dem Zapfen 36. Die Winkellage der Zapfen 36 und 42 zueinander bleibt dabei unverändert.

In gleicher Weise erfolgt der Ausgleich am entgegengesetzten Ende des Zwischenglieds 22. Dort wird der Lenker 70 im Uhrzeigersinn und der damit axial fluchtende, an der ersten Kupplungshälfte 10 angelenkte Lenker entgegen dem Uhrzeigersinn verschwenkt, und zwar um die gleichen Winkel wie die Lenker 68 und 72. Es erfolgt eine scheinbare Verkürzung der Lenker. Dem wird dadurch Rechtung getragen, daß das Zwischenglied 22 entgegen dem Uhrzeigersinn verdreht wird und sich dabei beispielsweise der Zapfen 60 des Zwischenglieds in Umfangsrichtung dem Zapfen 44 der zweiten Kupplungshälfte 12 nähert. Die gegenseitige Winkellage der an den beiden Kupplungshälften 10, 12 vorgesehenen Zapfen bleibt dabei unverändert.

Es erfolgt also eine homokinetische Übertragung der Drehbewegung.

In gleicher Weise erfolgt die Bewegungsübertragung mittels der an dem zweiten Zwischenglied angelenkten Lenker. Die Lenker, z. B. 70 und 72, sind an dem Zwischenglied 22 so angelenkt, daß sie sich beide von diesem Zwischenglied entgegen dem Uhrzeigersinn etwa im Umfangsrichtung erstrecken. An dem Zwischenglied 24 sind alle Lenker, z. B. 76 und 78, so angelenkt, daß sie sich von diesem Zwischenglied 24 im Uhrzeigersinn von Fig. 1 etwa in Umfangsrichtung erstrecken.

In ähnlicher Weise gestattet die Kupplung, wobei zunächst einmal ein Zwischenglied 22 betrachtet wird, bei homokinetischer Ubertragung der Drehbewegung auch einen Radialversatz der Wellen.

Es sei einmal angenommen, daß bei feststehender Kupplungshälfte 10 die Kupplungshälfte 12 parallel nach unten in Fig. 2 bewegt wird. Bei einer solchen Bewegung wird z. B. der Zapfen 42 des Lenkers 72 nach unten bewegt, während der in Ruhestellung damit fluchtende Zapfen 36 des Lenkers 68 an seiner Stelle verbleibt. Die Zapfen 50 und 52 bleiben aber fluchtend, und die Abstände der Zapfen 36, 50 bzw. 42, 52 bleiben durch die Lenker 68 und 72 vorgegeben. Es erfolgt eine Ausgleichsbewegung einmal in Form einer Schwenkbewegung der Lenker um die Zapfen und zum anderen in Form einer Schwenkbewegung des Zwischenglieds 22 um eine zu seiner Längsrichtung senkrechte, in der Papierebene von Fig. 1 liegende Achse. Die Abwärtsbewegung des Zapfens 42 gegen den Zapfen 52 wird dadurch kompensiert, daß sich einmal der Lenker 72 entgegen dem Uhrzeigersinn in Fig. 1 um den Zapfen 52 verschwenkt und außerdem das Zwischenglied 22 und der Lenker 72 sowie damit auch der Lenker 68 eine Ausgleichsbewegung aus ihren Ebenen, z. B. Papierebene von Fig. 1 heraus ausführen. Die Zapfen 36 und 42 bleiben dabei in der Papierebene von Fig. 2.

Ähnlich ist das Verhalten der Kupplung bei einem Radialversatz in horizontaler Richtung in Fig. 1.

Die Kupplung gestattet also auch bei einem Radialversatz eine winkeltreue oder homokinetische Übertragung der Drehbewegung.

Fig. 3 und 4 zeigen eine vereinfachte Ausführung der Wellenkupplung. Bei dieser vereinfachten Ausführung ist statt zweier Zwischenglieder mit zugehörigen Lenkeranordnung nur ein Zwischenglied 210 vorgesehen. Das Zwischenglied 210 bildet einen Ring 212 mit diametral einander gegenüberliegenden, radial nach außen ragenden Armen 214 und 216. Der Arm 214 trägt ein Paar von fluchtenden, axialen Zapfen 218, 220 auf gegenüberliegenden Seiten mit Wülsten 222 und 224. Die Wülste 222, 224 sind von je einer Gummikalotte 226, 228 umgeben, die in einer zylindrischen Ausnehmung 230, 232 je eines Lenkers 234 bzw. 236 sitzt. Die Gummikalotten 226 und 228 sind jeweils zweiteilig und um die Wülste 222 und 224 herumgesetzt. Die Enden der Gummikalotten, z. B. der Gummikalotte 226, sind durch im wesentlichen konische Blechteile 238, 240 mit abgewinkelten Rändern 242 und 244 abgedeckt, wobei der Rand 242 jeweils einen radialen Flansch und der Rand 244 einen axialen Kragen bildet. Der Blechteil 240 liegt mit dem Rand 242 an einem radial einwärts vorstehenden Rand 246 des Lenkers 234 an. Der Rand 242 des Blechteils 238 wird durch einen in die Ausnehmung 230 eingesetzten Ring 248 gehalten, der durch einen Sprengring 250 gesichert ist.

In gleicher Weise sind die Lenker 234 und 236 an Zapfen 252 bzw. 254 der (nicht dargestellten) ersten bzw. zweiten Kupplungshälfte elastisch angelenkt.

Auf der diametral gegenüberliegenden Seite sind an dem Arm 216 Zapfen 256 und 258 angebracht, an denen Lenker 260 bzw. 262 elastisch angelenkt sind.

Es ist zweckmäßig, das Zwischenglied 210 zentriert zu halten, um eine Auswärtsbewegung unter dem Einfluß der Fliehkraft bei Leerlauf auszuschließen. Beim Arbeiten unter Last erfolgt eine Zentrierung durch die übertragenen Drehmomente.

Wenn nur ein Knickwinkel zwischen den Wellenachsen aber kein Radialversatz auftritt, kann die Zentrierung durch eine zwischen den Kupplungshälften angeordnete, feststehende Lagerung erfolgen. Wenn auch ein Radialversatz auftritt, kann das Zwischenglied 210 elastisch an die Mittellage gefesselt sein. Das ist in Fig. 5 durch die Federn 264 und 266 angedeutet.

Das Zwischenglied 210 ist mit dem Ring 212 und dem zentralen Durchbruch 268 so ausgebildet worden, daß sich eine Welle dort hindurcherstrecken kann. Auch bei der Ausführung nach Fig. 1 und 2 können die Zwischenglieder als an- oder aufeinander gelagerte Ringe ausgebildet sein, die den Durchtritt einer zentralen Achse oder Welle gestatten.

In Fig. 5 und 6 ist mit 270 eine erste Kupplungshälfte und mit 272 eine zweite Kupplungshälfte bezeichnet. Zwischen den Kupplungshälften, die jede von einer Nabe 274 bzw. 276 und vier radialen Ansätzen, z. B. 278 bzw. 280 gebildet sind, zwei zueinander gekreuzte Zwischenglieder 282 und 284 angeordnet. Die erste Kupplungshälfte 270 ist über eine erste Lenkeranordnung mit einem Paar von diametral einander gegenüberliegenden Lenkern 286, 288 über die Kalottenzapfen 287, 289 bzw. 291, 293 mit dem Zwischenglied 282 verbunden. Die zweite Kupplungshälfte 272 ist über eine zweite Lenkeranordnung mit einem Paar von diametral einander gegenüberliegenden Lenkern 290, 292 ebenfalls mit dem Zwischenglied 282 verbunden. Je ein Lenker, z. B. 286 des einen Paares ist in Axialrichtung gesehen fluchtend mit einem Lenker 290 des anderen Paares angeordnet. Entsprechend ist der Lenker 282 in Axialrichtung gesehen fluchtend mit dem Lenker 292 angeordnet. Die diametrale einander gegenüberliegenden Lenker 286, 290 und 288, 292 erstrecken sich von dem Zwischenglied aus jeweils im gleichen Drehsinn im wesentlichen in Umfangsrichtung.

In entsprechender Weise ist das Zwischenglied 284 mit der ersten Kupplungshälfte 270 und der zweiten Kupplungshälfte 272 verbunden. Ein Lenker 294 an dem in Fig. 5 rechten Ende des Zwischenglieds 284 verbindet dieses mit der ersten Kupplungshälfte und ein damit fluchtender Lenker 296 verbindet das Zwischenglied 284 mit der zweiten Kupplungshälfte 272. Ein weiteres Paar von fluchtenden Lenkern zwischen dem Zwischenglied 284 und der ersten bzw. zweiten Kupplungshälfte 270 bzw. 272 ist an dem in Fig. 5 linken Ende vorgesehen, die in Fig. 6 nicht sichtbar sind und von denen in Fig. 5 ein Lenker 298 dargestellt ist. Die Lenker 294, 296 und 298 erstrecken sich ebenfalls von dem Zwischenglied 284 aus jeweils in gleichem Drehsinn im wesentlichen in Umfangsrichtung.

Im Gegensatz zu der Ausführungsform nach Fig. 1 und 2 bei welcher sich die Lenker von dem einen Zwischenglied 22 entgegen dem Uhrzeigersinn und von dem Zwischenglied 24 im Uhrzeigersinn etwa in Umfangsrichtung erstrecken, erstrecken sich bei der vorliegenden Ausführungsform die Lenker von allen Zwischengliedern aus in der gleichen Richtung, nämlich im Uhrzeigersinn in Fig. 5.

Während bei Fig. 1 und 2 die beiden Zwischenglieder 22 und 24 durch einen Bolzen 80 um eine zentrale Achse, die in der Ruhestellung mit der Umlaufachse zusammenfällt, drehbeweglich miteinander verbunden sind, sind bei der vorliegenden Ausführungsform die Zwischenglieder 282 und 284 über ein allseits bewegliches Gelenk 300 miteinander verbunden.

Im einzelnen weisen die Zwischenglieder 282, 284 zur drehbeweglichen Verbindung in ihrem Kreuzungsbereich einander zugewandte und fluchtende Vertiefungen 302, 304 auf. Zwischen den Vertiefungen 302 und 304 ist eine Lagerkugel 306 gehalten. Wie am besten aus Fig. 5 ersichtlich ist, weist jedes der beiden sich kreuzenden Zwischenglieder 282 und 284 ein Paar von um 180° gegeneinander winkelversetzten und zur Umlaufachse 308 zentrierte sektorförmige Vorsprünge 310, 312 bzw. 314, 316 auf, die sich über je einen Winkel von weniger als 90°, z. B. 80°, erstrecken. In jedem solchen Paar von Ansätzen 310, 312 bzw. 316, 314 ist eine zur Umlaufachse 308 zentrierte sphärische Vertiefung 302 bzw. 304 vorgesehen, so daß an den Vorsprüngen sphärische Lagerflächen von sektorförmiger Grundform gebildet werden. Die Vorsprünge 310, 312 des einen Zwischenglieds 282 greifen zwischen die Vorsprünge 314, 316, wobei die Lagerkugel 306 zwischen den Paaren von Lagerflächen gehalten wird. Da die Vorsprünge sich über je einen Winkel von z. B. 80° erstrecken, ist zwischen den ineinander greifenden Vorsprüngen jeweils ein Winkelbereich von etwa 10° frei, der eine Verdrehung der Zwischenglieder um die Umlaufachse 308 zuläßt. Die Zwischenglieder 282 und 284 sind durch die Lagerkugel 306 mit ihren einander zugewandten Oberflächen in einem Abstand voneinander gehalten, so daß um die Lagerkugel herum auch eine Schwenkbewegung der Zwischenglieder 282 und 284 zueinander und aus deren Radialebenen heraus erfolgen kann, wie sie zum Ausgleich eines Radialversatzes erforderlich ist. In Radialrichtung sind dagegen die Zwischenglieder zueinander zentriert, so daß keine der Zwischenglieder durch Fliehkräfte radial nach außen gezogen werden kann.

Die Zwischenglieder sind von langgestreckten radialen Körpern mit einer zentralen Kröpfung 318 bzw. 320 und beiderseits derselben sich erstreckenden, die Lenker tragenden radialen Armen 322, 324 bzw. 326, 328 gebildet. Die sich kreuzenden Zwischenglieder 282, 284 greifen mit ihren Kröpfungen 318, 320 so umeinander, daß die radialen Arme 322, 324, 326 und 328 im wesentlichen in einer gemeinsamen Ebene liegen. Um die axialen Abmessungen der Wellenkupplung zu vermindern, können die Zwischenglieder 282 und 284 auf den einander zugewandten Seiten im Bereich der Kröpfungen 318, 320 querverlaufende Vertiefungen 330 bzw. 332 aufweisen. Die Vorsprünge 310, 312 bzw. 314, 316 erstrecken sich in Längsrichtung der Zwischenglieder 282 bzw. 284 in diese Vertiefungen 330 bzw. 332 hinein.

Bei der Ausführungsform nach Fig. 5 und 6 sind zwischen den Zwischengliedern 282 und 284 vorgespannte, elastische Zugglieder 334, 336 vorgesehen, die in Fig. 6 nur schematisch angedeutet sind, so daß die Zwischenglieder 282 und 284 kraftschlüssig in Anlage an der Lagerkugel 306 gehalten werden.

Eine abgewandelte Ausführung ist in den Figuren 7 und 8 dargestellt. Der Aufbau der Ausführung nach Fig. 7 und 8 ist ähnlich wie bei der Ausführung nach Fig. 5 und 6, und entsprechende Teile sind mit den gleichen Bezugszeichen versehen wie dort.

Wie aus Fig. 7 ersichtlich ist, liegt die Oberfläche 338 jedes Zwischenglieds, z. B. 282, beiderseits der Vertiefung 330 in der Äquatorebene der Lagerkugel 306. Auf dieser Oberfläche 338 sind fluchtend mit den Vorsprüngen 310, 312 (vgl. Fig. 5) Halteglieder 340, 342 durch Schrauben 344, 346 befestigt. Diese Halteglieder 340, 342 weisen sphärische Anlageflächen 348, 350 auf. Die Halteglieder 340, 342 erstrecken sich über die Lagerkugel 306 und liegen mit den Anlageflächen 348, 350 an dieser an. In ähnlicher Weise, wie in Fig. 9 für das Zwischenglied 282 beschrieben ist, greift das Zwischenglied 284 mit (in Fig. 7 und Fig. 8 nicht sichtbaren) Haltegliedern um die in Fig. 7 linke Hälfte der Lagerkugel 306. In dem Schnitt von Fig. 8 sind nur die Vorsprünge 314 und 316 sowie die geschnitten dargestellten Schrauben 352, 354 zur Befestigung dieser letzteren Halteglieder zu sehen.

Auf diese Weise werden beide Zwischenglieder durch die Lager- und Anlageflächen 302, 304 bzw. 348, 350 formschlüssig mit der Lagerkugel 306 verbunden.

Fig. 9 zeigt eine andere Ausführung des zwischen den Zwischengliedern 356, 358 vorgesehenen, allseits beweglichen Gelenks 360.

Bei der Ausführungsform nach Fig. 9 sind die Zwischenglieder 356, 358 von langgestreckten geraden Körpern gebildet. Eines der Zwischenglieder nämlich das Zwischenglied 356, weist in der Mitte eine sphärische Wulst 362 auf. Das andere Zwischenglied besitzt in der Mitte einen zylindrischen Durchbruch 364, in welchen die Wulst 362 des einen Zwischenglieds 356 eingeschoben ist. Beiderseits der Wulst 362 sind in den Durchbruch 364 Lagerteile 366, 368 mit sphärischen Lagerflächen eingesetzt und durch Abstandsringe 370, 372 und Sprengringe 374, 376 gesichert, so daß die Wulst 362 formschlüssig in dem Durchbruch 364 gehalten ist.

Das Zwischenglied 358 besteht bei dieser Ausführung aus einem den Durchbruch 364 bildenden Ring 378 und sich beiderseits dieses Ringes anschließenden radialen Armen, welche die Lagerzapfen, z. B. 380 tragen.

Die Lagerzapfen 382, 384 und 386, 388 dürfen bei dieser Anordnung nicht aus einem Stück mit dem Zwischenglied 356 hergestellt sein, da anderenfalls das Zwischenglied 356 nicht durch den Durchbruch 364 hindurchgestellt werden könnte. Das Zwischenglied 356 weist daher an seinen Enden Querbohrungen auf, durch welche je ein die Laherzapfen 382, 384 bzw. 386, 388 bildender durchgehender Zapfen hindurchgesteckt ist. Auf diese Lagerzapfen 382, 384, die zum Hindurchstecken wiederum gerade, zylindrische Zapfen sein müssen, werden dann in noch zu beschreibender Weise die Teile der Gelenke aufgesetzt.

Auch bei dieser Anordnung sind somit die beiden, im Ruhezustand zueinander senkrecht angeordneten Zwischenglieder 356 und 358 durch ein allseits bewegliches Gelenk in der Mitte miteinander verbunden und dadurch aneinander zentriert.

Eine Anordnung mit nur einem Zwischenglied 390 zwischen den Kupplungshälften 392 und 394 ist in Fig. 10 und 11 dargestellt.

Zur Zentrierung des einzigen Zwischenglieds 390 ist an den beiden Kupplungshälften je eine Buchse 396, 398 mit sphärischer Außenfläche und einer zylindrischen Lagerbohrung in einer sphärischen Lagerfläche 400 bzw. 402 gelagert. In den zylindrischen Lagerbohrungen der beiden Buchsen 396 und 398 ist ein Zapfen 404 drehbar und axialbeweglich gelagert, der in Mitte eine sphärische Wulst 406 trägt. Das einzige Zwischenglied 390 ist mit einer Axialbohrung 408 auf dieser Wulst gelagert.

Die sphärische Lagerfläche 400 bzw. 402 ist jeweils von zwei Lagerhalbschalen 410, 412 bzw. 414, 416 gebildet, welche die Buchse 396 bzw. 398 umschließen. Diese Lagerhalbschalen sind durch Stege 418, 420 zentral an den als Naben ausgebildeten Kupplungshäften 392 und 394 befestigt.

Auf beiden Enden des Zapfens 404 sind Paare von Ringscheiben 422, 424 bzw. 426, 428 geführt, wobei jeweils eine Ringscheibe 422 bzw. 428 jedes Paares an einen Teil der benachbarten Kupplungshälfte 392 bzw. 394, nämlich der Lagerhalbschale 412 bzw. 414, und die andere Ringscheibe 424, 426 an dem Zwischenglied 390 um die Axialbohrung 408 herum anliegt. Zwischen den Ringscheiben 422, 424 bzw. 426, 428 jedes Paares sind Druckfedern 430 bzw. 432 vorgesehen, welche die jeweiligen Enden des Zapfens 404 umgeben.

Bei einem Radialversatz der beiden Wellen, wenn sich beispielsweise die Kupplungshälfte 394 gegenüber der Kupplungshälfte 392 nach unten in Fig. 11 bewegt, bewegt sich die Lagerkugel 406 um den halben Wellenversatz. Die durch den Wellenversatz hervorgerufene Änderung des Abstands zwischen den Krümmungsmittelpunkten der sphärischen Lagerflächen 400 und 402 wird bei der Schrägstellung des Zapfens 404 durch axiale Verschiebung der Zapfenenden in den Buchsen 396, 398 ausgeglichen.

Zur Anlenkung der Lenker 434, 436, 338 und 440 an den Zapfen 442, 444, 446 und 448 des Zwischenglieds 390 sind Gelenke vorgesehen. Diese bestehen aus einem auf dem Zapfen, z. B. 442, sitzenden Wälzlager 450, welches eine freie Drehbarkeit um die Zapfenachse gewährleistet, einem auf dem Wälzlager gelagerten Innenring 452 mit sphärischer Außenfläche 454, in welcher in Längsrichtung verlaufende bogenförmige Rinnen 456 (Fig. 10 gebildet sind, einem in dem Lenker 434 gehaltenen Außenring 458 mit einer sphärischen Innenfläche 460, welche die sphärische Außenfläche 454 des Innenrings 454 konzentrisch mit Abstand umgibt und in welcher in Längsrichtung verlaufende bogenförmige Rinnen 462 fluchtend mit den Rinnen 456 der besagten Außenfläche 454 gebildet sind. Zwischen den Rinnen 456, 462 und einem Käfig 464 sind Kugeln gehalten, die eine Schwenkbewegung zwischen Lenker 434 und Zapfen 442 in einer Längsebene ermöglichen. Wie aus Fig. 10 ersichtlich ist, sind beide Gelenke jedes Lenkers einschließlich Wälzlager 450 und Innenring 452 von einem gemeinsamen gummielastischen Mantel 466 umgeben. Der gummielastische Mantel, der bei einer Auslenkung des Gelenks elastisch deformiert wird, sorgt dafür, daß die Winkelbewegungen des Lenkers sich auf beide an dem jeweiligen Lenker vorgesehenen Gelenke gleichmäßig verteilt.

Die Lenker können jedoch auch über Gummikalotten elastisch an den Zapfen der Zwischenglieder angelenkt sein.

Fig. 12 und 13 zeigen eine Wellenkupplung mit zwei Zwischengliedern 634 und 636, die zueinander gekreuzt angeordnet und durch eine Lagerkugel 638 aneinander zentriert sind. Zu diesem Zweck weisen die Zwischenglieder 634, 636, die um die Umlaufachse 546 gegeneinander winkelversetzt angeordnet sind, in ihrem Kreuzungsbereich einander Zugewandte und fluchtende Vertiefungen 548, 550 auf, zwischen denen die Lagerkugel 638 gehalten ist. Die Lagerkugel 638 ist mit reibungsmindernden Mitteln versehen. Diese reibungsmindernden Mittel weisen einen reibungsmindernden Belag 552 auf der Oberfläche der Vertiefungen 548, 550 auf. Weiterhin ist die Lagerkugel 638 als Hohlkugel ausgebildet und mit einem Schmiermittel gefüllt. Der Innenraum der Lagerkugel 638 steht über radiale Kanäle 560 mit den in den Vertiefungen 548, 550 gehaltenen Oberflächenteilen in Verbindung. Das Zwischenglied 634 ist über ein Paar von diametral einander gegenüberliegenden, in der Ruhestellung zueinander antiparallelen allseits beweglich angelenkten Lenkern 640, 642 mit Zapfen 644, 646 der (nicht dargestellten) ersten Kupplungshälfte und über ein zweites Paar von Lenkern 648, 650, die in der Ruhestellung in Axialrichtung gesehen mit den Lenkern 640 bzw. 642 fluchten, mit Zapfen 652 bzw. 654 der zweiten Kupplungshälfte verbunden. In ähnlicher Weise ist das Zwischenglied 636 über zwei Paare 656, 658 von in Axialrichtung gesehen fluchtenden Lenkern einerseits mit der ersten Kupplungshälfte und andererseits mit der zweiten Kupplungshälfte verbunden.

Die Lagerkugel 638 weist einen zentralen Durchbruch 660 mit einem eingeschweißten Rohrstück 662 auf. Eine durchgehende Welle 664 ist durch den zentralen Durchbruch 660 hindurchgeführt.

**Patentansprüche**

1. Wellenkupplung, welche einen Knickwinkel zwischen den zu kuppelnden Teilen zuläßt, mit einer ersten Kupplungshälfte (10 ; 270 ; 392), einer zweiten Kupplungshälfte (12 ; 272 ; 394) und einem Zwischenglied (22 ; 210 ; 282 ; 356 ; 390 ; 634) zwischen der ersten und der zweiten Kupplungshälfte (10, 12 ; 392 bzw. 394), bei welcher

die erste Kupplungshälfte (10 ; 270 ; 392) mit dem Zwischenglied (22 ; 210 ; 282 ; 390) durch eine erste Lenkeranordnung verbunden ist, die ein Paar von diametral einander gegenüberliegenden sich von dem Zwischenglied (22) aus jeweils im gleichen Sinn im wesentlichen in Umfangsrichtung erstreckenden, allseits beweglich angelenkten Lenkern (68, ... ; 234, 260 ; 286, 288 ; 434, 438 ; 640, 642) aufweist und

die zweite Kupplungshälfte (12 ; 272 ; 394) mit dem Zwischenglied (22 ; 282 ; 390 ; 634) durch eine zweite Lenkeranordnung verbunden ist, die ein Paar von diametral einander gegenüberliegenden sich von dem Zwischenglied (22) aus jeweils im gleichen Sinn im wesentlichen in Umfangsrichtung erstreckenden, in axialem Abstand von der ersten Lenkeranordnung (68, ... ; 234, 260 ; 286, 288 ; 434, 438 ; 640, 642) allseits beweglich angelenkten Lenkern (70, 72 ; 236, 262 ; 290, 292 ; 436, 440 ; 648, 650) aufweist, dadurch gekennzeichnet, daß

(a) die Lenkeranordnung zwischen erster Kupplungshälfte (10 ; 270 ; 392) und Zwischenglied (22 ; 282 ; 390 ; 634) und die Lenkeranordnung zwischen Zwischenglied (22 ; 282 ; 390 ; 634) und zweiter Kupplungshälfte (12 ; 272 ; 394) je nur ein einziges Paar von diametral einander gegenüberliegenden Lenkern (68, ... bzw. 70, 72 ; 234, 260 bzw. 236, 262 ; 286, 288 bzw. 290, 292 ; 434, 438 bzw. 436, 440 ; 640, 642 bzw. 644, 648) aufweisen und

(b) jeweils ein Lenker (68 ; 234, 260 ; 286, 288 ; 434, 438 ; 640, 642) der einen Lenkeranordnung gleichachsig mit einem Lenker (72 ; 236 bzw. 262 ; 290 bzw. 292 ; 436 bzw. 440 ; 644 bzw. 648) der anderen Lenkeranordnung an dem Zwischenglied (22 ; 210 ; 282 ; 390 ; 634) angelenkt ist.

2. Wellenkupplung nach Anspruch 1, dadurch gekennzeichnet, daß

(a) zwei Zwischenglieder (22, 24) um die Umlaufachse (26) gegeneinander winkelversetzt angeordnet sind und

(b) jedes Zwischenglied (22, 24) über ein erstes Paar von diametral einander gegenüberliegenden Lenkern (68... ; 74...) mit der ersten Kupplungshälfte (10) und über ein zweites Paar von diametral einander gegenüberliegenden, in Axialrichtung gesehen fluchtend mit den Lenkern des ersten Paares angeordneten Lenkern (70, 72 ; 76, 78) mit der zweiten Kupplungshälfte (12) verbunden ist.

3. Wellenkupplung nach Anspruch 2, dadurch gekennzeichnet, daß die Zwischenglieder (22, 24) um eine zentrale Achse (26) drehbeweglich miteinander verbunden sind.

4. Wellenkupplung nach einem der Ansprüche 1 bis 3, dadurch gekennzeichnet, daß die Lenker jeweils über Gummikalotten (94, 100) allseits beweglich mit den Kupplungshälften (10, 12) bzw. dem Zwischenglied (22, 24) verbunden sind.

5. Wellenkupplung nach Anspruch 4, dadurch gekennzeichnet, daß

(a) jeder Lenker (72) ein Gehäuse (80) bildet, in welchem Gummikalotten (94, 100) gehaltert sind,

(b) an den Kupplungshälften (10, 12) bzw. den Zwischengliedern (22, 24) Zapfen (42, 52) sitzen, welche in die Gehäuse (81) der betreffenden Lenker (72) hineinragen und in den Gummikalotten (94, 100) gehalten sind.

6. Wellenkupplung Anspruch 1, dadurch gekennzeichnet, daß das Zwischenglied (282 bzw. 284) über ein allseits bewegliches Gelenk (300) in einer sowohl eine Verdrehung um die Umlaufachse als auch eine Neigung des Zwischengliedes (282 bzw. 284) gegen eine Radialebene zulassenden Weise gegen radiale Verlagerung gesichert ist.

7. Wellenkupplung nach den Ansprüchen 1 bis 3 und 6, dadurch gekennzeichnet, daß die Zwischenglieder über das allseits bewegliche Gelenk (300) miteinander verbunden sind.

8. Wellenkupplung nach Anspruch 7, dadurch gekennzeichnet, daß

(a) die Zwischenglieder (282, 284) zur drehbeweglichen Verbindung in ihrem Kreuzungsbereich einander zugewandte und fluchtende Vertiefungen (302, 304) aufweisen und

(b) eine Lagerkugel (306) zwischen den Vertiefungen (302, 304) gehalten ist.

9. Wellenkupplung nach Anspruch 8, dadurch gekennzeichnet, daß

(a) jedes der beiden sich kreuzenden Zwischenglieder (282, 284) ein Paar von um 180° gegeneinander winkelversetzten und zur Umlaufachse zentrierten, sektorförmigen Vorsprüngen (310, 312 ; 314, 316) aufweist, die sich über je einen Winkel von weniger als 90°, z. B. 80°, erstrecken,

(b) in jedem solchen Paar (310, 312 ; 314, 316) von Ansätzen eine zur Umlaufachse zentrierte sphärische Vertiefung (302, 304) vorgesehen ist, so daß an den Vorsprüngen (310, 312, 314, 316) sphärische Lagerflächen von sektorförmiger Grundform gebildet werden, und

(c) die Vorsprünge (310, 312) des einen Zwischenglieds (282) zwischen die Vorsprünge (314, 316) des anderen Zwischenglieds (284) greifen, wobei die Lagerkugel (306) zwischen den Paaren von Lagerflächen gehalten wird.

10. Wellenkupplung nach Anspruch 9, dadurch gekennzeichnet, daß

(a) die Zwischenglieder (282, 284) von langgestreckten radialen Körpern mit einer zentralen Kröpfung (318, 320) und beiderseits derselben sich erstreckenden, die Lenker tragenden radialen Armen (322, 324 ; 326, 328) gebildet sind und

(b) die sich kreuzenden Zwischenglieder (282, 284) mit ihren Kröpfungen (318, 320) so umeinandergreifen, daß die radialen Arme (322, 324, 326, 328) im wesentlichen in einer gemeinsamen Ebene liegen.

11. Wellenkupplung nach Anspruch 10, dadurch gekennzeichnet, daß

(a) die Zwischenglieder (282, 284) auf den einander zugewandten Seiten im Bereich der Kröpfungen (318, 320) querverlaufende Vertiefungen (330, 332) aufweisen und

(b) die Vorsprünge (310, 312 ; 314, 316) sich in Längsrichtung der Zwischenglieder (282, 284) in diese Vertiefungen (330, 332) hineinerstrecken.

12. Wellenkupplungen nach Anspruch 11, dadurch gekennzeichnet, daß zwischen den Zwischengliedern (282, 284) vorgespannte elastische Zugglieder (334, 336) vorgesehen sind, so daß die Zwischenglieder (282, 284) kraftschlüssig in Anlage an der Lagerkugel (306) gehalten werden.

13. Wellenkupplung nach Anspruch 11, dadurch gekennzeichnet, daß

a) die Oberfläche (338,...) jedes Zwischenglieds (282, 284) beiderseits der Vertiefung (330, 332) in der Äquatorebene der Lagerkugel (306) liegt und

b) auf diese Oberfläche (338,...) fluchtend mit den Vorsprüngen (310, 312 ; 314, 316) Halteglieder (340, 342 ; ...) mit sphärischen Anlageflächen (348, 350 ; ...) befestigt sind, welche sich über die Lagerkugel (306) erstrecken und mit den Anlageflächen (348, 350 ; ...) an dieser anliegen, wodurch beide Zwischenglieder (282, 284) durch die Lager- und Anlageflächen formschlüssig mit der Lagerkugel (306) verbunden sind.

14. Wellenkupplung nach Anspruch 7, dadurch gekennzeichnet, daß

a) die Zwischenstücke (356, 358) von langgestreckten geraden Körpern gebildet sind,

b) eines der Zwischenstücke (356) in der Mitte eine sphärische Wulst (362) aufweist,

c) das andere Zwischenstück (358) in der Mitte einen zylindrischen Durchbruch (364) besitzt, in welchen die Wulst (362) des einen Zwischenstücks (356) eingeschoben ist, und

d) Lagerteile (366, 368) mit sphärischen Lagerflächen beiderseits der Wulst (362) in den Durchbruch (364) eingesetzt und durch Sprengringe (374, 376) gesichert sind, so daß die Wulst (368) formschlüssig in dem Durchbruch (364) gehalten ist.

15. Wellenkupplung nach Anspruch 6, dadurch gekennzeichnet, daß

a) an den beiden Kupplungshälften (392, 394) je eine Buchse (396, 398) mit sphärischer Außenfläche und einer sphärischen Lagerfläche (400, 402) gelagert ist,

b) in den zylindrischen lagerbohrungen der beiden Buchsen (396, 398) ein Zapfen (404) drehbar und axial beweglich gelagert ist, der in der Mitte eine sphärische Wulst (406) trägt, und

c) das einzige Zwischenglied (390) mit einer Axialbohrung (408) auf diese Wulst (406) gelagert ist.

16. Wellenkupplung nach Anspruch 15, dadurch gekennzeichnet, daß

a) auf den beiden Enden des Zapfens (404) Paare von Ringscheiben (422, 424 ; 426, 428) geführt sind, wobei jeweils eine Ringscheibe (422, 428) jedes Paares an einem Teil (412, 414) der benachbarten Kupplungshälfte (392, 394) und die andere Ringscheibe (424, 426) an dem Zwischenglied (390) um die Axialbohrung (408) herum anliegt, und

b) zwischen den Ringscheiben (422, 424 ; 426, 428) jedes Paares Druckfedern (430, 432) vorgesehen sind, welche die jeweiligen Enden des Zapfens (404) umgeben.

17. Wellenkupplung nach einem der Ansprüche 6 bis 16, dadurch gekennzeichnet, daß die Lenker über Gummikalotten elastisch an Zapfen der Zwischenglieder angelenkt sind.

18. Wellenkupplung nach einem der Ansprüche 6 bis 14, dadurch gekennzeichnet, daß zur Anlenkung der Lenker an den Zapfen Gelenke vorgesehen sind bestehend aus :

a) einem auf dem Zapfen (442) sitzenden Wälzlagern (450), welches eine freie Drehbarkeit um die Zapfenachse gewährleistet,

b) einem auf dem Wälzlager (450) gelagerten Innenring (452) mit sphärischer Außenfläche (454), in welcher in Längsrichtung verlaufende bogenförmige Rinnen (456) gebildet sind,

c) einem in dem Lenker gehaltenen Außenring (458) mit einer sphärischen Innenfläche (460), welche die sphärische Außenfläche (454) des Innenrings (452) konzentrisch mit Abstand umgibt und in welcher in Längsrichtung verlaufende bogenförmige Rinnen (462) fluchtend mit den Rinnen (456) der besagten Außenfläche (454) gebildet sind, und

d) Kugeln (463), die zwischen den Rinnen (456, 462) und einem Käfig (464) gehalten sind und eine Schwenkbewegung zwischen Lenker und Zapfen in einer Längsebene ermöglichen.

19. Wellenkupplung nach Anspruch 18, dadurch gekennzeichnet, daß die beiden Gelenke jedes Lenkers einschließlich Wälzlager und Innenring von einem gemeinsamen gummielastischen Mantel (466) umgeben sind.

20. Wellenkupplung nach Anspruch 1, dadurch gekennzeichnet, daß

a) zwei über Lenkeranordnungen mit den Kupplungshälften verbundene Zwischenglieder (634, 636) um die Umlaufachse (546) gegeneinander winkelversetzt angeordnet sind und zur drehbeweglichen Verbindung in ihrem Kreuzungsbereich einander zugewandte und fluchtende Vertiefungen (548, 550) aufweisen, zwischen denen eine Lagerkugel (638) gehalten ist, und

b) die Lagerkugel (638) mit reibungsmindernden Mitteln versehen ist.

21. Wellenkupplung nach Anspruch 20, dadurch gekennzeichnet, daß die reibungsmindernden Mittel einen reibungsmindernden Belag (552) auf der Oberfläche der Vertiefungen (548, 550) aufweisen.

22. Wellenkupplung nach Anspruch 20 oder 21, dadurch gekennzeichnet, daß

a) die Lagerkugel (638) als Hohlkugel ausgebildet und mit einem Schmiermittel gefüllt ist und

b) der Innenraum (558) der Lagerkugel (638) über radiale Kanäle (560) mit den in den Vertiefungen (548, 550) gehaltenen Oberflächenteilen in Verbindung steht.

23. Wellenkupplung nach einem der Ansprüche 20 bis 22, dadurch gekennzeichnet, daß

a) die Lagerkugel (638) einen zentralen Durchbruch (660) aufweist und

b) eine durchgehende Welle (664) durch diesen zentralen Durchbruch (660) hindurchgeführt ist.

**Claims**

1. Shaft coupling, which permits a deflection angle between the portions to be coupled, having a first coupling half (10 ; 270 ; 392), a second coupling half (12 ; 272 ; 394) and an intermediate member (22 ; 210 ; 282 ; 356 ; 390 ; 634) between the first and the second coupling halves (10, 12 ; 392 and 394, respectively), in which

the first coupling half (10 ; 270 ; 392) is connected to the intermediate member (22 ; 210 ; 282 ; 390) by means of a first link system, which has a pair of diametrically opposite links (68, ... ; 234, 260 ; 286, 288 ; 434, 438 ; 640, 462) extending from the intermediate member (22) each in the same angular direction essentially in peripheral direction and pivoted universally movably, and

the second coupling half (12 ; 272, 394) is connected to the intermediate member (22 ; 282 ; 390 ; 634) by means of a second link system, which has a pair of diametrically opposite links (70, 72 ; 236, 262 ; 290, 292 ; 436, 440 ; 648, 650) extending from the intermediate member (22) each in the same angular direction essentially in peripherial direction and pivoted universally movably and axially spaced from the first link system (68, ... ; 234, 260 ; 286, 288 ; 434, 438 ; 640, 642), characterized in that

a) the link system between the first coupling half (10 ; 270 ; 392) and the intermediate member (22 ; 282 ; 390 ; 634) and the link system between the intermediate member (22 ; 282 ; 390 ; 634) and the second coupling half (12 ; 272 ; 394) have each just one pair of diametrically opposite links (68, ... and 70, 72 ; 234, 260 and 236, 262 ; 286, 288 and 290, 292 ; 434, 438 and 436, 440 ; 640, 642 and 644, 648, respectively), and

b) one link (68 ; 234, 260 ; 286, 288 ; 434, 438 ; 640, 642) of one of the link systems is pivoted at the intermediate member (22 ; 210 ; 282 ; 390 ; 634) coaxially with one link (72 ; 236 and 262 ; 290 and 292 ; 436 and 440 ; 644 and 648 ; respectively) of the other link system.

2. Shaft coupling as set forth in claim 1, characterized in that

(a) two intermediate members (22, 24) are arranged angularly offset about the axis of rotation (26), and

(b) each intermediate member (22, 24) is connected to the first coupling half (10) by means of a first pair of diametrically opposite links (68..., 74...) and to the second coupling half (12) by means of a second pair of diametrically opposite links (70, 72 ; 76, 78) aligned axially with the links of the first pair.

3. Shaft coupling as set forth in claim 2, characterized in that the intermediate members (22, 24) are interconnected in a manner permitting rotational movement about a central axis (26).

4. Shaft coupling as set forth in one of the claims 1 to 3, characterized in that the links are connected universally movably to the coupling halves (10, 12) and to the intermediate member (22, 24), respectively, through rubber cups (94, 100).

5. Shaft coupling as set forth in claim 4, characterized in that

(a) each link (72) forms a housing (80), in which rubber cups (94, 100) are supported,

(b) pins (42, 52) are located on the coupling halves (10, 12) and on the intermediate members (22, 24), respectively, which pins (42, 52) extend into the housing (81) of the link (72) concerned and which are supported in the rubber cups (94, 100).

6. Shaft coupling as set forth in claim 1, characterized in that the intermediate member (282 and 284, respectively) is secured against radial displacement through a universally movable joint (300) in a manner permitting a rotation about the axis of rotation as well as an inclination of the intermediate member (282 and 284, respectively) relative to a radial plane.

7. Shaft coupling as set forth in claims 1 to 3 and 6, characterized in that the intermediate members are interconnected by means of the universally movable joint (300).

8. Shaft coupling as set forth in claim 7, characterized in that

(a) the intermediate members (282, 284) in their intersection area has recesses (302, 304) aligned with and facing each other for connection permitting rotational movement, and

(b) a bearing ball (306) is held between the recesses (302, 304).

9. Shaft coupling as set forth in claim 8, characterized in that

(a) each of the two intersecting intermediate members (282, 284) has a pair of sector-shaped projections (310, 312 ; 314, 316) angularly offset by 180° and centered to the axis of rotation, which projections each extend through an angle of less than 90°, for example 80°,

(b) a spherical recess (302, 304) centered to the axis of rotation is provided in each of these pairs (310, 312 ; 314, 316) of projections, such that spherical bearing surfaces of generally sector-shaped form are formed on the projections (310, 312, 314, 316), and

(c) the projections (310, 312) of one of the intermediate members (282) extend between the projections (314, 316) of the other intermediate member (284), the bearing ball (306) being held between the pairs of bearing surfaces.

10. Shaft coupling as set forth in claim 9, characterized in that

(a) the intermediate members (282, 284) are formed by elongated radial bodies having a central elbow (318, 320) and radial arms (322, 324 ; 326, 328) extending on both sides thereof and carrying the links, and

(b) the intersecting intermediate members (282, 284) extend one around the other with their elbows (318, 320) such that the radial arms (322, 324, 326, 328) are located substantially in a common plane.

11. Shaft coupling as set forth in claim 10, characterized in that

(a) the intermediate members (282, 284) have transversal recesses (330, 332) on the sides facing each other in the area of the elbows (318, 320), and

(b) the projections (310, 312 ; 314, 316) extend into these recesses (330, 332) in the longitudinal direction of the intermediate members (282, 284).

12. Shaft coupling as set forth in claim 11, characterized in that biassed elastic tension members (334, 336) are provided between the intermediate members (282, 284) such that the intermediate members (282, 284) are kept in tensional engagement with the bearing ball (306).

13. Shaft coupling as set forth in claim 11, characterized in that

(a) the surface (338, ...) of each intermediate member (282, 284) is located on both sides of the recess (330, 332) in the equatorial plane of the bearing ball (306), and

(b) supporting members (340, 342 ; ...) having spherical contact surfaces (348, 350 ; ...) and being aligned with the projections (310, 312 ; 314, 316) are attached to this surface (338, ...), which supporting members (348, 350 ; ...) extend over the bearing ball (306) and engage it with the contact surfaces (348, 350 ; ...), whereby the two intermediate members (282, 284) are connected positively with the bearing ball (306) by means of the bearing and contact surfaces

14. Shaft coupling as set forth in claim 7, characterized in that

(a) the intermediate elements (356, 358) are formed by elongated straight bodies,

(b) one the intermediate pieces (356) has a spherical bead (362) in the center,

(c) the other intermediate piece (358) has a cylindrical aperture (364) in the center, into which the bead (362) of the intermediate piece (356) is pushed, and

(d) bearing members (366, 368) having spherical bearing surfaces on both sides of the bead (362) are placed into the aperture (364) and secured by snap rings (374, 376) such that the bead (368) is kept positively in the aperture (364).

15. Shaft coupling as set forth in claim 6, characterized in that

(a) a bushing (396, 398) having spherical outer surface and a cylindrical bearing bore is mounted in a spherical bearing surface (400, 402) on each of the two coupling halves (392, 394),

(b) a pin (404) is mounted rotatably and axially movably in the cylindrical bearing bores of both bushings (396, 398), which pin carries a spherical bead (406) in the center, and

(c) the single intermediate member (390) having an axial bore (408) is mounted on this bead (406).

16. Shaft coupling as set forth in claim 15, characterized in that

(a) pairs of annular discs (422, 424 ; 426, 428) are guided on the two ends of the pin (404), one annular disc (422, 428) of each pair engaging a portion (412, 414) of the adjacent coupling half (392, 394) and the other annular disc (424, 426) engaging the intermediate member (390) around the axial bore (408), and

(b) compression springs (430, 432) are provided between the annular discs (422, 424 ; 426, 428) of each pair, which compression springs (430, 432) surround the ends of the pin (404).

17. Shaft coupling as set forth in anyone of the claims 6 to 16, characterized in that the links are pivoted elastically on pins of the intermediate members by means of rubber cups.

18. Shaft coupling as set forth in anyone of the claims 6 to 14, characterized in that joints are provided on the pins for pivoting the links, which joints consist of

(a) a roller bearing (450) located on the pin (442), which ensures free rotation about the pin axis,

(b) an inner ring (452) mounted on the roller bearing (450) and having a spherical outer surface (454), in which inner ring (452) arcuate grooves (456) are formed, which extend in longitudinal direction,

(c) an outer ring (458) held in the link and having a spherical inner surface (460), which is spaced from and concentrically surrounds the spherical outer surface (454) of the inner ring (452), and in which arcuate grooves (462) are formed, which extend in longitudinal direction and which are aligned with the grooves (456) of said outer surface (454), and

(d) balls (463), which are held between the grooves (456, 462) and a cage (464) and which enable a swivelling movement between the link and the pin in a longitudinal plane.

19. Shaft coupling as set forth in claim 18, characterized in that the two joints of each link including roller bearing and inner ring are surrounded by a common rubber like resilient jacket (466).

20. Shaft coupling as set forth in claim 1, characterized in that

(a) two intermediate members (634, 636) connected to the coupling halves through link systems are arranged angularly offset about the axis of rotation (546) and, in their intersection area, have recesses (548, 550) aligned with and facing each other for connection permitting rotational movement, between which recesses (548, 550) a bearing ball is held (638), and

(b) the bearing ball (638) is provided with friction-reducing means.

21. Shaft coupling as set forth in claim 20, characterized in that the friction-reducing means comprise a friction-reducing cover (552) on the surface of the recesses (548, 550).

22. Shaft coupling as set forth in claim 20 or 21, characterized in that

(a) the bearing ball (638) is formed as a hollow sphere and filled with lubricant, and

(b) the cavity (558) of the bearing ball (638) communicates through radial passages (560) with the surface portions held in the recesses (548, 550).

23. Shaft coupling as set forth in anyone of the claims 20 to 22, characterized in that

(a) the bearing ball (638) has a central aperture (660), and

(b) a continuous shaft (664) is guided through this central aperture (660).

**Revendications**

1. Accouplement d'arbres permettant un angle de coude entre les éléments à accoupler et ayant un premier demi-accouplement (10 ; 270 ; 392), un deuxième demi-accouplement (12 ; 272 ; 394) et un membre intermédiaire (22 ; 210 ; 282 ; 356 ; 390 ; 634) entre le premier et le deuxième demi-accouplement (10 ; 12 ; 392 et 394 respectivement), dans lequel

le premier demi-accouplement (10 ; 270 ; 392) est relié au membre intermédiaire (22 ; 210 ; 282 ; 390) par l'intermédiaire d'une première disposition de bielles qui présente une paire de bielles (68, ... ; 234, 260 ; 286, 288 ; 434, 438 ; 640, 642) diamétralement opposées qui s'étendent depuis le membre intermédiaire (22) chacun dans le même sens, essentiellement en direction circonférentielle, et qui sont articulées d'une manière universellement mobile, et

le deuxième demi-accouplement (12 ; 272 ; 394) est relié au membre intermédiaire (22 ; 282 ; 390 ; 634) par l'intermédiaire d'une deuxième disposition de bielles qui présente une paire de bielles (68, ... ; 234, 260 ; 286, 288 ; 434, 438 ; 640, 642) diamétralement opposées qui s'étendent depuis le membre intermédiaire (22), chacun dans le même sens, essentiellement en direction circonférentielle, et qui sont articulées d'une manière universellement mobile, caractérisé par le fait que

(a) la disposition de bielles entre le premier demi-accouplement (10 ; 270 ; 392) et le membre intermédiaire (22 ; 282 ; 390 ; 634), et la disposition de bielles entre le membre intermédiaire (22 ; 282 ; 390 ; 634) et le deuxième demi-accouplement, ne possèdent chacune qu'une seule paire de bielles (68, ... et 70, 72 ; 234, 260, et 236, 262 ; 286, 288 et 290, 292 ; 434, 438, et 436, 440 ; 640, 642 et 644, 648, respectivement) diamétralement opposées, et

(b) chaque fois une bielle (68 ; 234, 260, 286, 288 ; 434, 438 ; 640, 642) de l'une des dispositions de bielles est articulée au membre intermédiaire (22 ; 210, 282 ; 390 ; 634), d'une manière équiaxe à une bielle (72, 236 et 262 ; 290 et 292 ; 436 et 440, 644 et 648, respectivement) de l'autre disposition de bielles.

2. Accouplement d'arbres selon la revendication 1, caractérisé par le fait que

(a) deux membres intermédiaires (22, 24) sont disposés, angulairement décalés, autour de l'axe de rotation (26) et

(b) chaque membre intermédiaire (22, 24) est relié au premier demi-accouplement (10), par l'intermédiaire d'une première paire de bielles (68... ; 74...) diamétralement opposées, et au deuxième demi-accouplement (12), par l'intermédiaire d'une deuxième paire de bielles (70, 72 ; 76, 78) diamétralement opposées et disposées d'une manière alignée sur les bielles de la première paire, vu en direction axiale.

3. Accouplement d'arbres selon la revendication 2, caractérisé par le fait que les membres intermédiaires (22, 24) sont reliés l'un à l'autre d'une manière permettant le mouvement rotatif autour d'un axe central (26).

4. Accouplement d'arbres selon l'une quelconque des revendications 1 à 3, caractérisé par le fait que les bielles sont reliées d'une manière universellement mobile aux demi-accouplements (10, 12) et au membre intermédiaire (22, 24), chaque fois par l'intermédiaire de calottes en caoutchouc (94, 100).

5. Accouplement d'arbres selon la revendication 4, caractérisé par le fait que

(a) la bielle (72) forme un boîtier (80) dans lequel sont montées des calottes en caoutchouc (94, 100),

(b) aux demi-accouplements (10, 12) et aux membres intermédiaires (22, 24) sont situés des pivots (42, 52) qui s'étendent dans les boîtiers (81) des bielles respectives (72) et qui sont retenus dans les calottes en caoutchouc (94, 100).

6. Accouplement d'arbres selon la revendication 1, caractérisé par le fait que le membre intermédiaire (282 et 284, respectivement) est assuré contre le déplacement radial par un joint (300) universellement mobil, d'une manière qui permet aussi bien une rotation autour de l'axe de rotation qu'une inclinaison du membre intermédiaire (282 et 284, respectivement) relatif à un plan radial.

7. Accouplement d'arbres selon les revendications 1 à 3 et 6, caractérisé par le fait que les membres intermédiaires sont reliés par l'intermédiaire du joint (300) universellement mobil.

8. Accouplement d'arbres selon la revendication 7, caractérisé par le fait que

(a) les membres intermédiaires (282, 284) possèdent dans leur domaine de croisement, des creux alignés et opposés (302, 304) pour la connexion permettant le mouvement rotatif, et

(b) une boule de montage (306) est tenue entre les creux (302, 304).

9. Accouplement d'arbres selon la revendication 8, caractérisé par le fait que

(a) chacun des deux membres intermédiaires se croisant (282, 284) présente une paire de saillies en forme de secteur (310, 312, 314, 316) qui sont angulairement décalées de 180° et centrées vers l'axe de rotation et qui s'étendent chacun sur un angle de moins de 90°, par exemple de 80°,

(b) dans chaque paire (310, 312 ; 314, 316) de saillies est prévu un creux sphérique (302, 304) centré vers l'axe de rotation, de sorte que des surfaces de montage sphériques d'une forme de base d'un secteur, sont formées aux saillies (310, 312, 314, 316), et

(c) les saillies (310, 312) de l'un des membres intermédiaires (282) s'étendent entre les saillies (314, 316) de l'autre membre intermédiaire (284), la boule de montage (306) étant tenue entre les paires de surfaces de montage.

10. Accouplement d'arbres selon la revendication 9, caractérisé par le fait que

(a) les membres intermédiaires (282, 284) sont formés par des corps radiaux allongés ayant un coude central (318, 320) et des bras radiaux (322, 324 ; 326, 328) s'étendant des deux côtés de celui-ci et supportant les bielles, et

(b) les membres intermédiaires (282, 284) se croisant s'étendent avec leurs coudes (318, 320) l'un autour de l'autre de sorte que les bras radiaux (322, 324, 326, 328) sont situés essentiellement dans un même plan.

11. Accouplement d'arbres selon la revendication 10, caractérisé par le fait que

(a) les membres intermédiaires (282, 284) présentent des creux transversaux (330, 332) sur les côtés opposés dans le domaine des coudes (318, 320), et

(b) les saillies (310, 312 ; 314, 316) s'étendent en direction longitudinale des membres intermédiaires (282, 284), dans les creux (330, 332).

12. Accouplement d'arbres selon la revendication 11, caractérisé par le fait que des éléments de traction élastiques précontraints (334, 336) de sorte que les membres intermédiaires (282, 284) sont tenus en contact, sous l'action d'une force, avec la boule de montage (306).

13. Accouplement d'arbres selon la revendication 11, caractérisé par le fait que

(a) la surface (338, ...) de chaque membre intermédiaire (282, 284) est située des deux côtés du creux (330, 332) dans le plan équatorial de la boule de montage (306) et

(b) des éléments de retenue (340, 342, ...) qui ont des surfaces de contact sphériques et qui sont alignés sur les saillies (310, 312 ; 314, 316) sont fixés sur cette surface (338, ...), les éléments de retenue (340, 342, ...) s'étendant sur la boule de montage (306) et étant en contact avec celle-ci par les surfaces de contact (348, 350, ...), par quel moyen les deux membres intermédiaires (282, 284) sont reliés, d'une manière géométriquement enfermée, à la boule de montage (306) par les surfaces de montage et de contact.

14. Accouplement d'arbres selon la revendication 7, caractérisé par le fait que

(a) les membres intermédiaires (356, 358) sont formés par des corps droits allongés,

(b) l'un des membres intermédiaires (356) possède au centre un bourrelet sphérique (362),

(c) l'autre membre intermédiaire (358) possède au centre une percée cylindrique (364) dans laquelle est introduit le bourrelet (362) du membre intermédiaire (356), et

(d) des éléments de montage (366, 368) ayant des surfaces sphériques sont placés des deux côtés du bourrelet (362) dans la percée (364) et assurés par des anneaux à détacher (374, 376) de sorte que le bourrelet (368) est tenu géométriquement enfermé dans la percée (364).

15. Accouplement d'arbres selon la revendication 6, caractérisé par le fait que

(a) une douille (396, 398) ayant une surface extérieure sphérique et un alésage de montage cylindrique, est montée dans une surface de montage sphérique (400, 402) à chacun des deux demi-accouplements (392, 394),

(b) dans les alésages de montage cylindriques des deux douilles (396, 398) est monté de manière rotative et axialement mobile, un pivot (404) qui porte un bourrelet sphérique (406) dans le centre, et

(c) le seul membre intermédiaire (390) ayant un alésage axial (408) est monté sur ce bourrelet (406).

16. Accouplement d'arbres selon la revendication 15, caractérisé par le fait que

(a) des paires de disques annulaires (422, 424 ; 426, 428) sont guidées sur les deux bouts du pivot (404), un disque annulaire, (422, 428) de chaque paire étant appliquée contre un élément (412, 414) du demi-accouplement adjacent (392, 394) et l'autre disque annulaire (424, 426) étant appliquée contre le membre intermédiaire (390) autour de l'alésage axial (408), et

(b) entre les disques annulaires (422, 424 ; 426, 428) de chaque paire sont prévus des ressorts de pression (430, 432) qui entourent les bouts du pivot (404).

17. Accouplement d'arbres selon l'une quelconque des revendications 6 à 16, caractérisé par le fait que les bielles sont articulées d'une manière élastique aux pivots des membres intermédiaires par l'intermédiaire des calottes en caoutchouc.

18. Accouplement d'arbres selon l'une quelconque des revendications 6 à 14, caractérisé par le fait que des joints sont prévus aux pivots pour l'articulation des bielles, les joints consistant de :

(a) un palier de roulement (450) qui est situé sur le pivot (442) et qui assure la libre rotation autour de l'axe du pivot.

(b) une bague intérieure (450) ayant des surfaces extérieures sphériques (452) qui est montée sur le palier de roulement (450) et dans laquelle sont formées des rainures arquées (456) s'étendant en direction longitudinale,

(c) une bague extérieure (458) tenue dans la bielle et ayant une surface intérieure sphérique (460) qui entoure, avec un espacement, d'une manière concentrique la surface extérieure sphérique (454) de la bague intérieure (452), et dans laquelle sont formées des rainures arquées (462) qui s'étendent en direction longitudinale et qui sont alignées sur les rainures (456) de ladite surface extérieure (456), et

(d) des boules (463) qui sont tenues entre les rainures (456, 462) et une cage (464) et qui rendent possible un mouvement pivotant entre la bielle et le pivot dans un plan longitudinal.

19. Accouplement d'arbres selon la revendication 18, caractérisé par le fait que les deux joints de chaque bielle, y compris le palier de roulement et la bague intérieure, sont entourés d'une chemise commune (466), élastique comme caoutchouc.

20. Accouplement d'arbres selon la revendication 1, caractérisé par le fait que

(a) deux membres intermédiaires (634, 636) reliés par l'intermédiaire des dispositions de bielles aux demi-accouplements, sont disposés d'une manière angulairement décalée autour de l'axe de rotation, et ils possèdent, pour la connexion permettant mouvement rotatif dans leur domaine de croisement, des creux opposés et alignés (548, 550) entre lesquels une boule de montage (638) est retenue, et

(b) la boule de montage (638) est prévue de moyens diminuant la friction.

21. Accouplement d'arbres selon la revendication 20, caractérisé par le fait que les moyens diminuant la friction possèdent une couche (552) diminuant la friction, sur la surface des creux (548, 550).

22. Accouplement d'arbres selon la revendication 20 ou 21, caractérisé par le fait que

(a) la boule de montage (638) est formée comme boule creuse et elle est remplie de matière lubrifiante et

(b) la cavité (558) de la boule de montage (638) est en contact avec les éléments de surface tenus dans les creux (548, 550), par l'intermédiaire de passages radiaux (560).

23. Accouplement d'arbres selon l'une quelconque des revendications 20 à 22, caractérisé par le fait que

(a) la boule de montage (638) possède une percée centrale (660) et

(b) un arbre continu (664) est guidé à travers cette percée centrale (660).

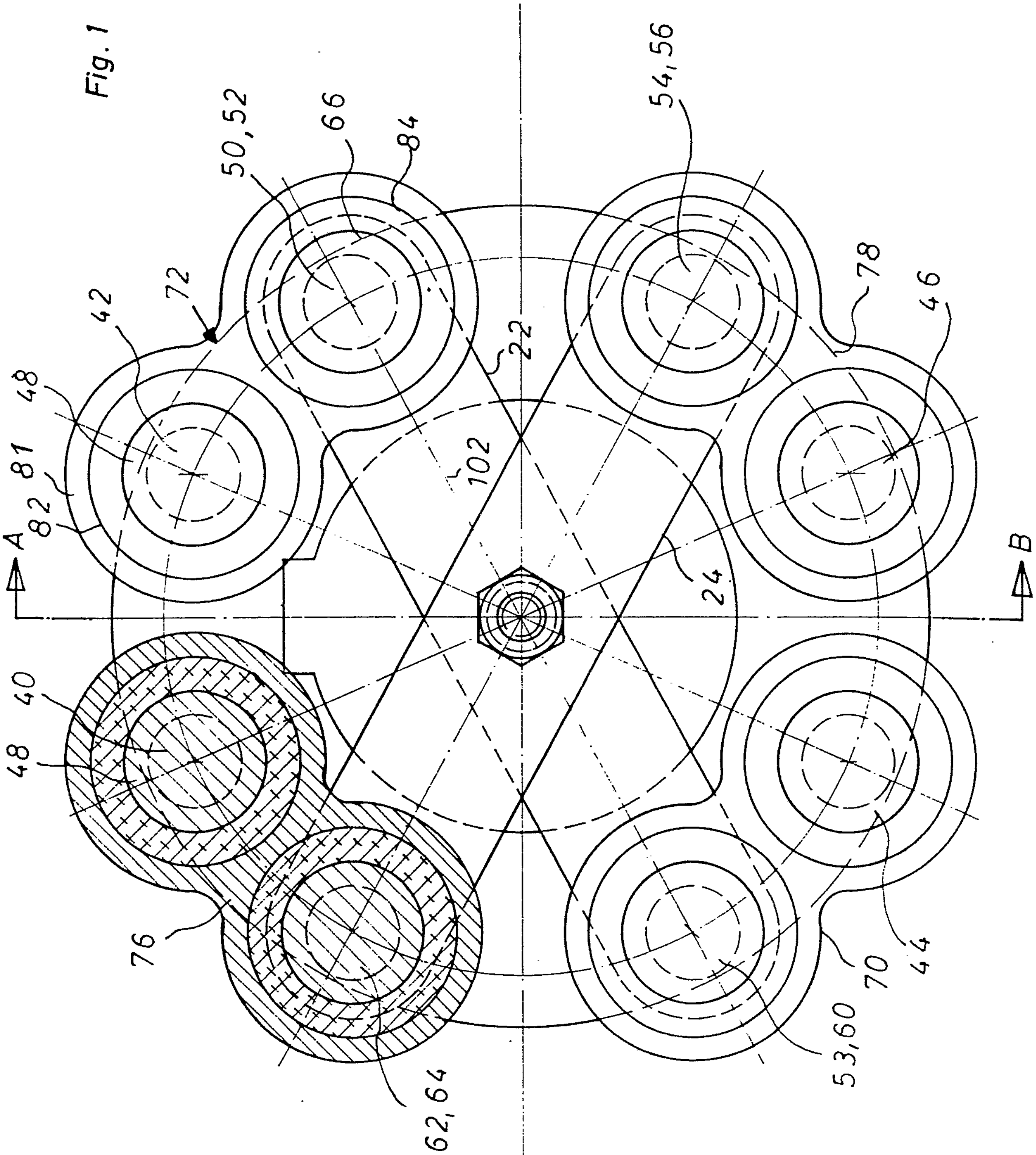
50,52
66
84
54,56
72
42
48
81
82
A
78
46
22
102
24
B
40
48
76
62,64
53,60
70
44

Fig. 1

Fig. 2

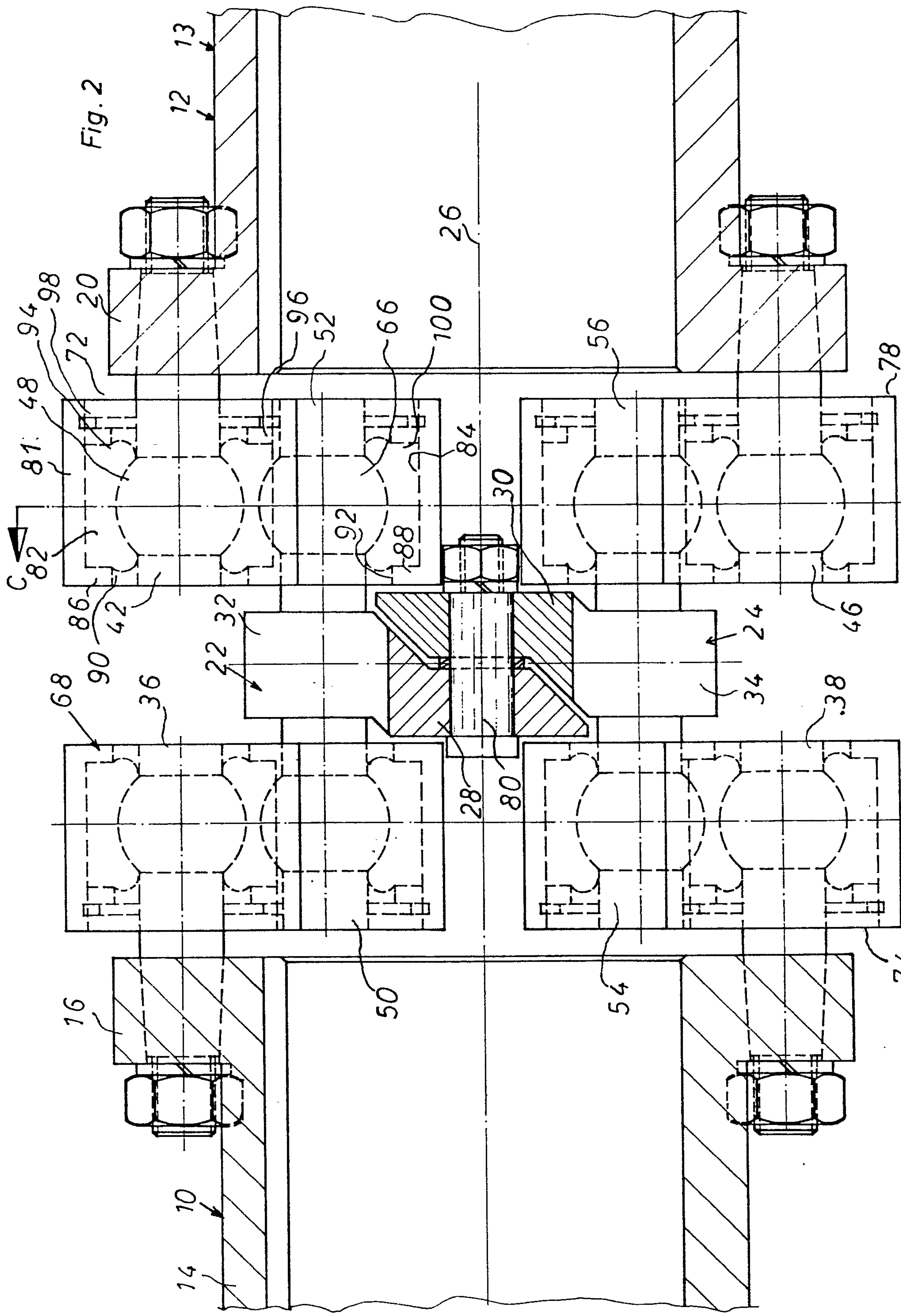

Fig. 3

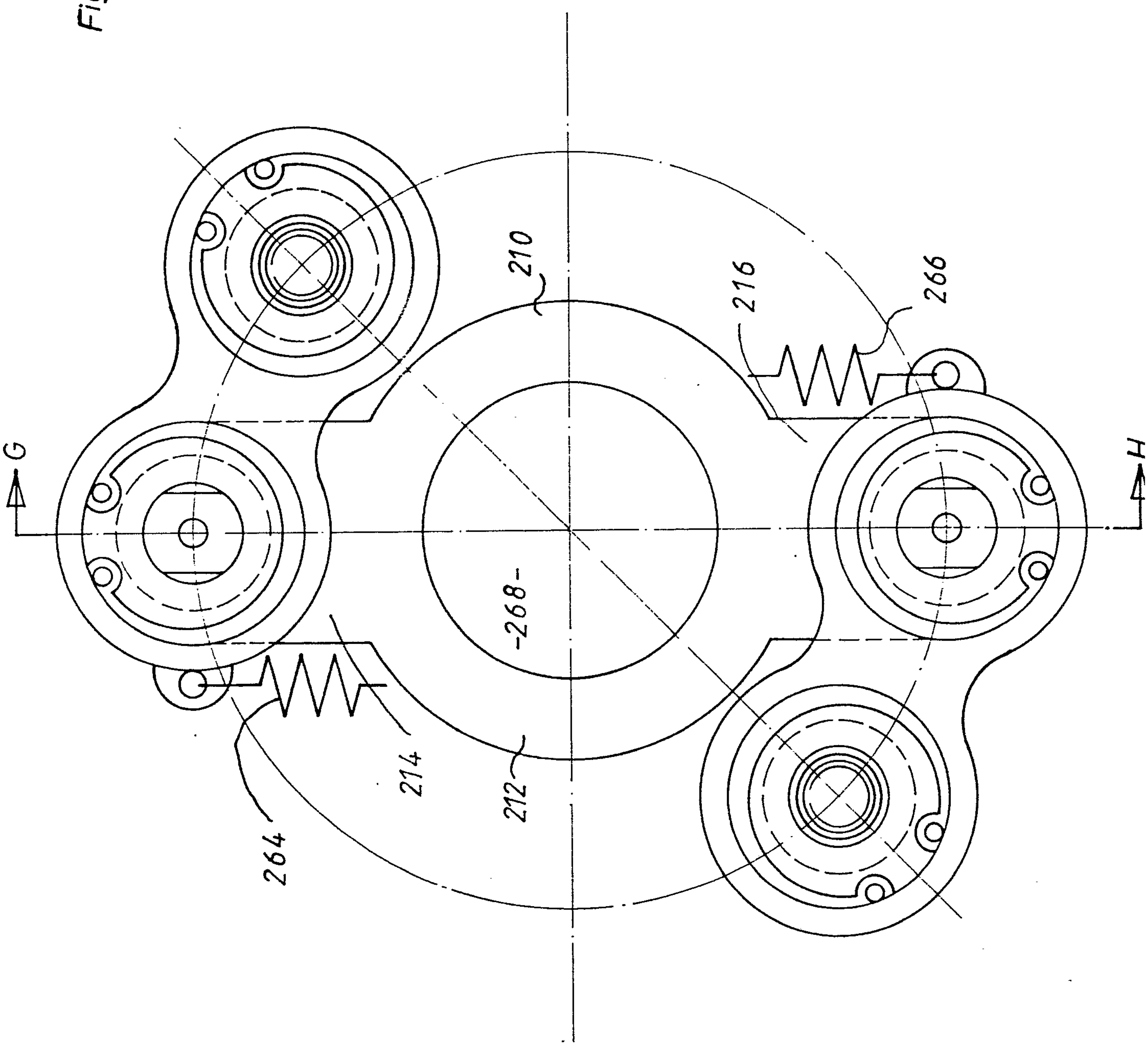

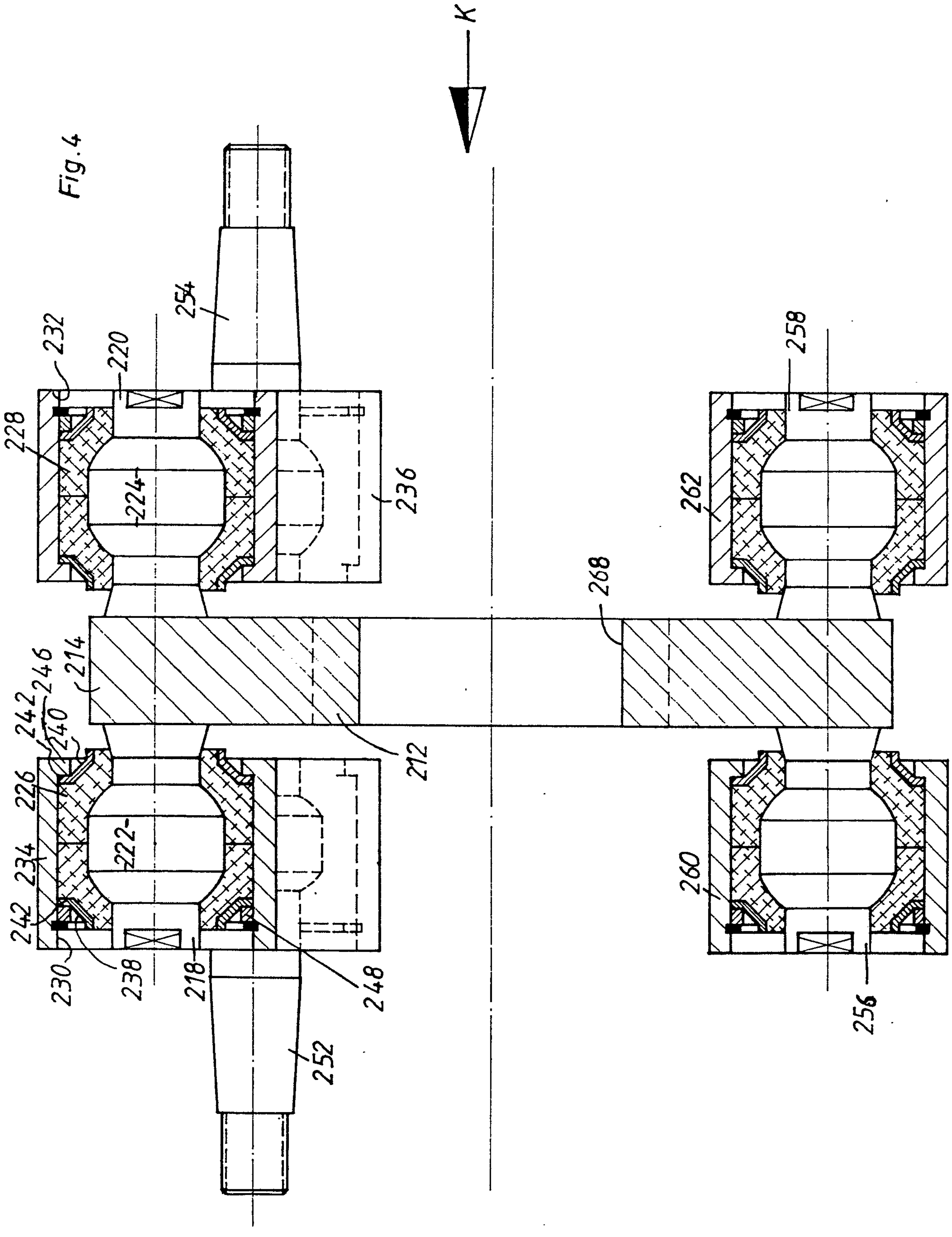
K
228
232
220
254
224
236
262
258
268
214
246
242
240
226
212
222
234
242
230
238
218
248
252
260
256

Fig. 4

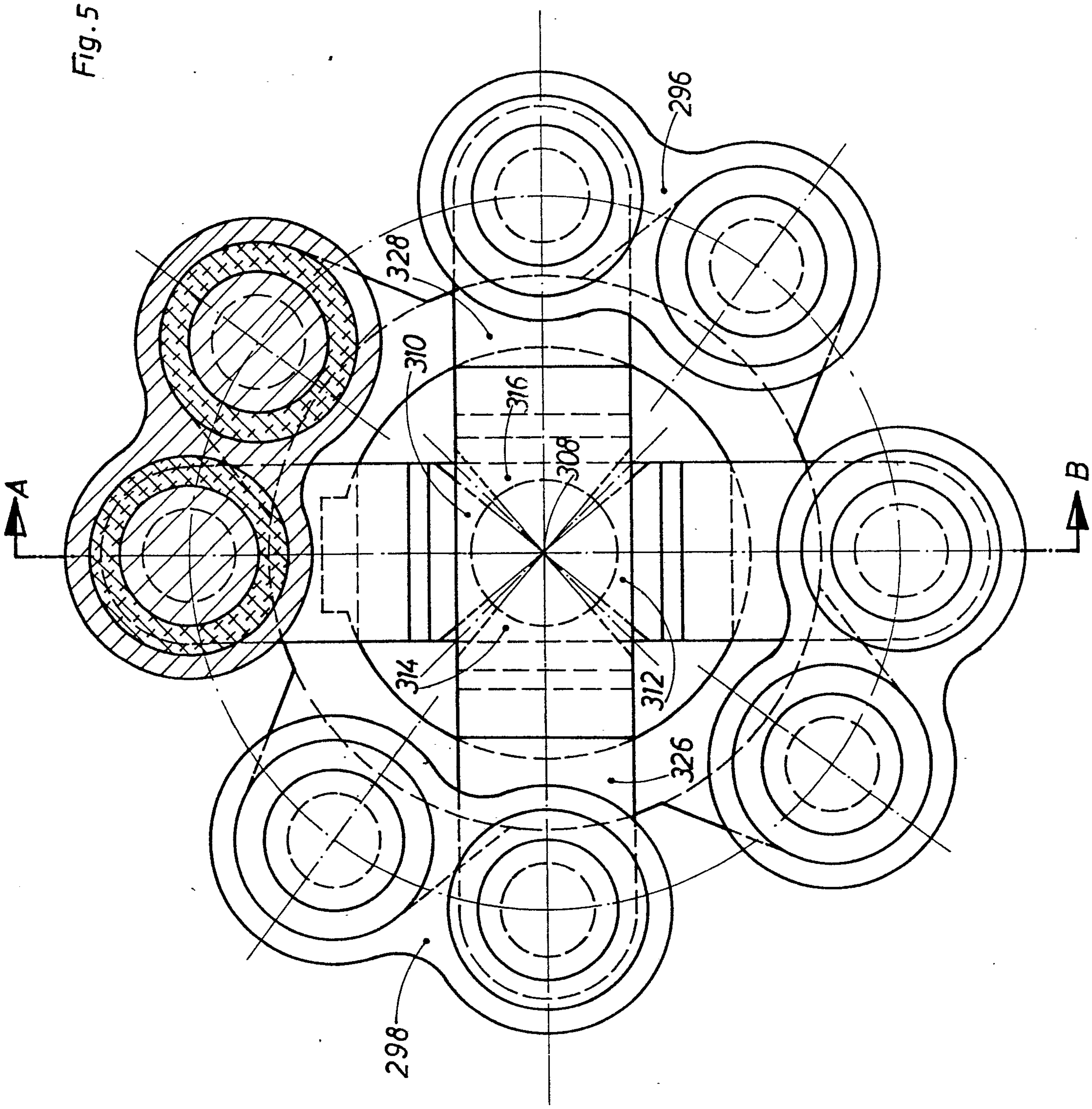


Fig. 5

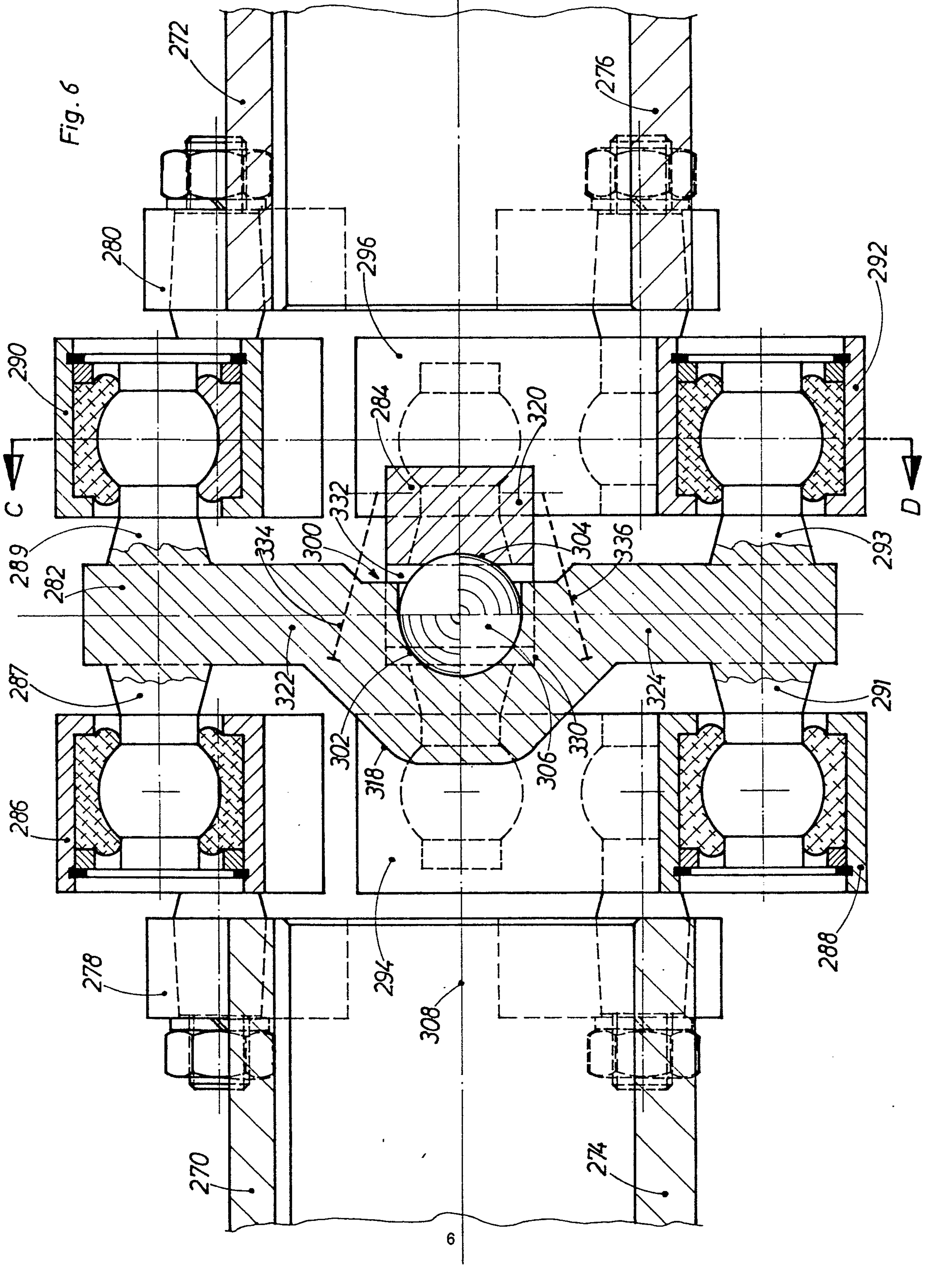
272
276
280
296
292
290
284
320
332
C
D
334
300
304
336
289
293
282
322
324
287
291
302
330
306
318
286
288
294
278
308
270
274

Fig. 6

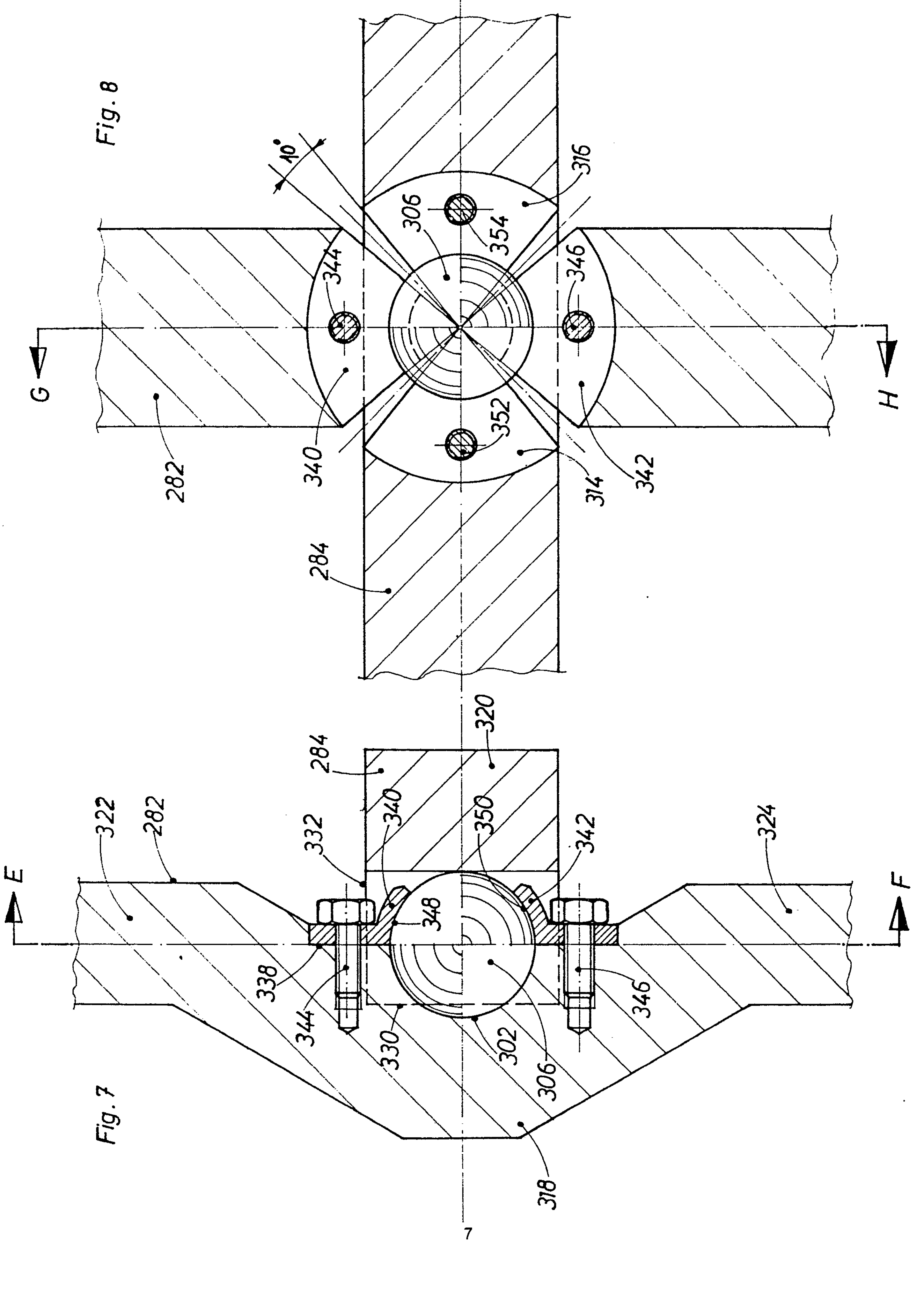

10°
306
354
316
344
346
G
H
282
340
352
314
342
284
320
322
332
350
E
F
348
338
344
330
302
306
346
324
318


Fig. 8

Fig. 7

Fig. 9

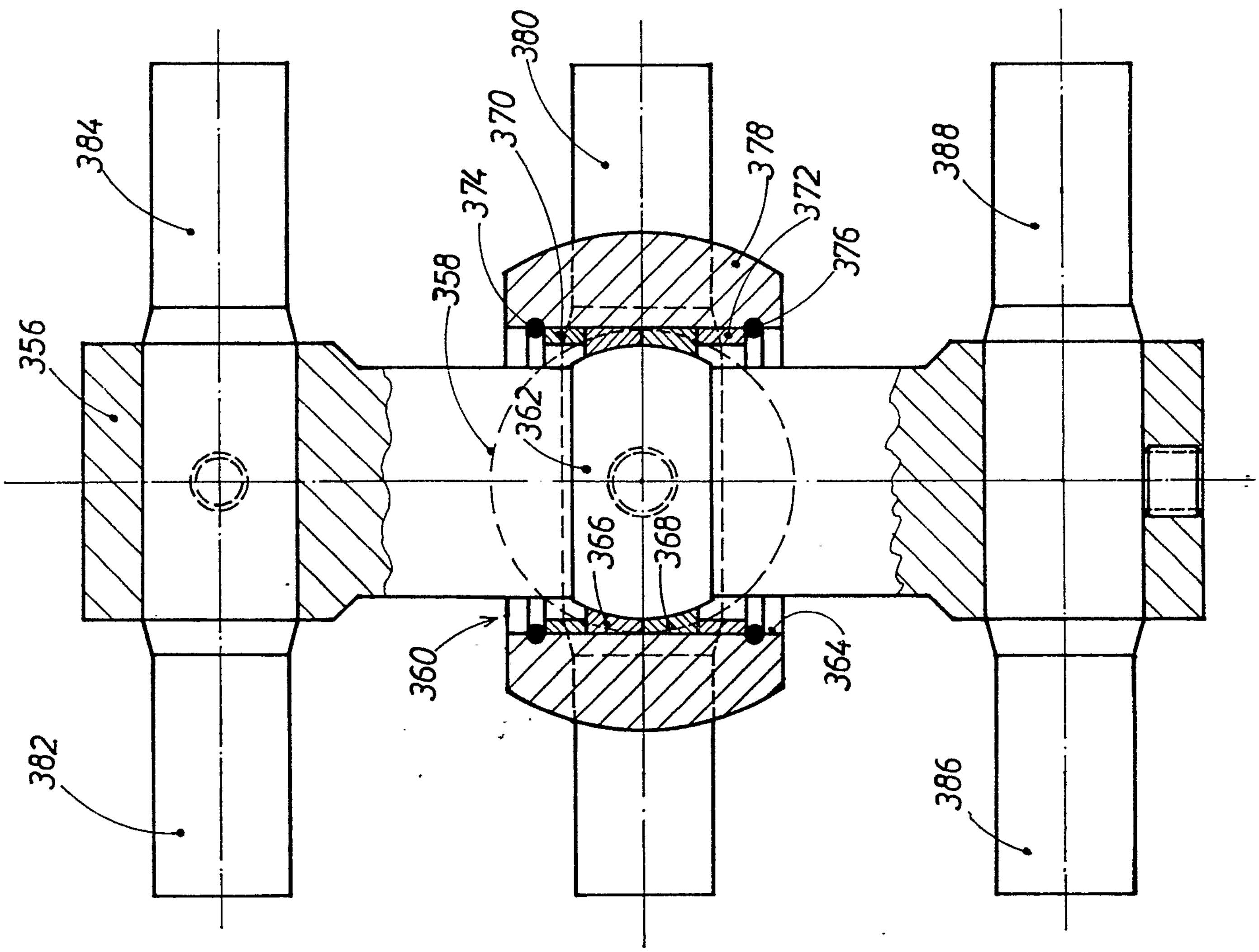

380
370
384
378
374
372
388
358
376
356
362
366
368
360
364
382
386

Fig. 10

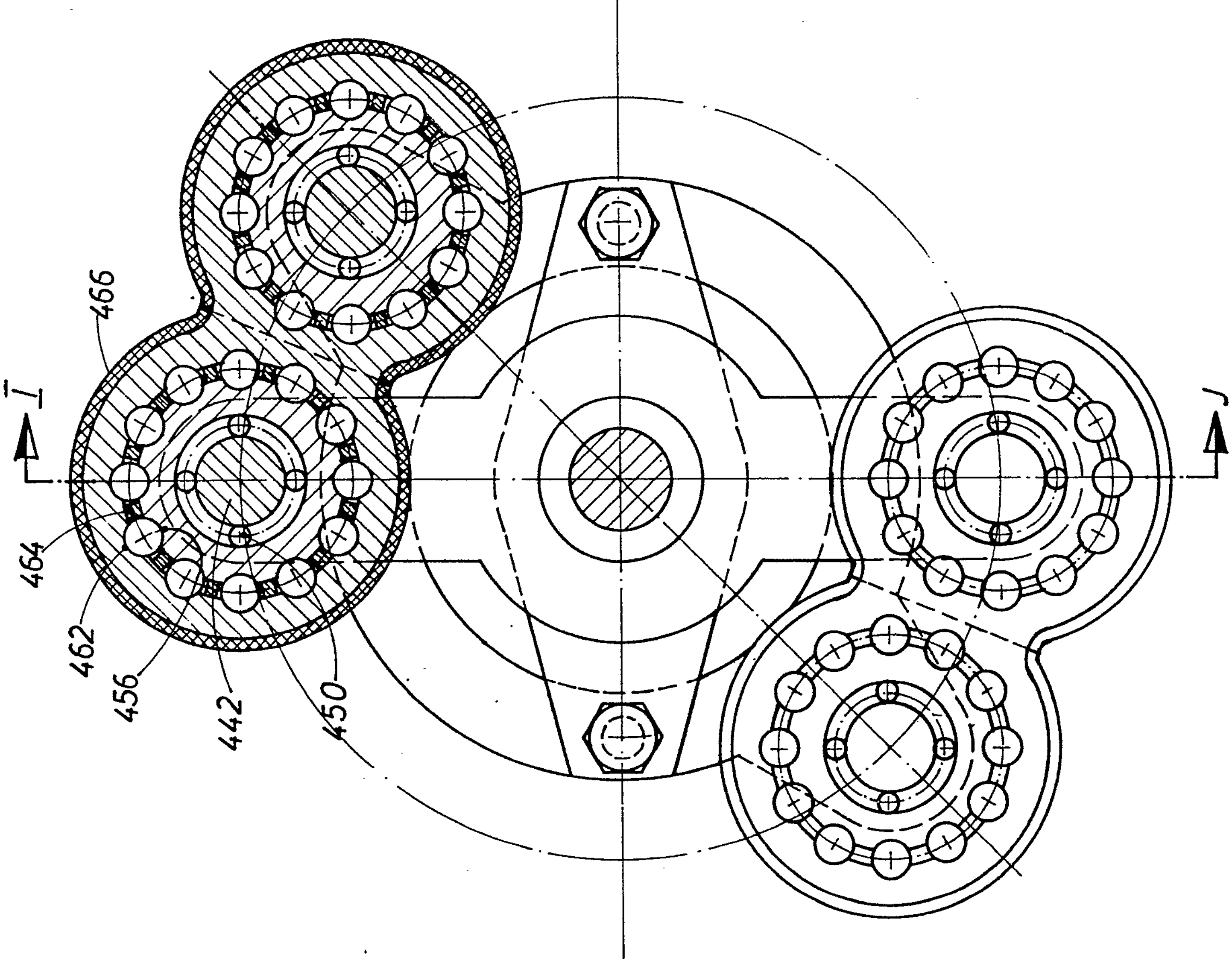

Fig.11

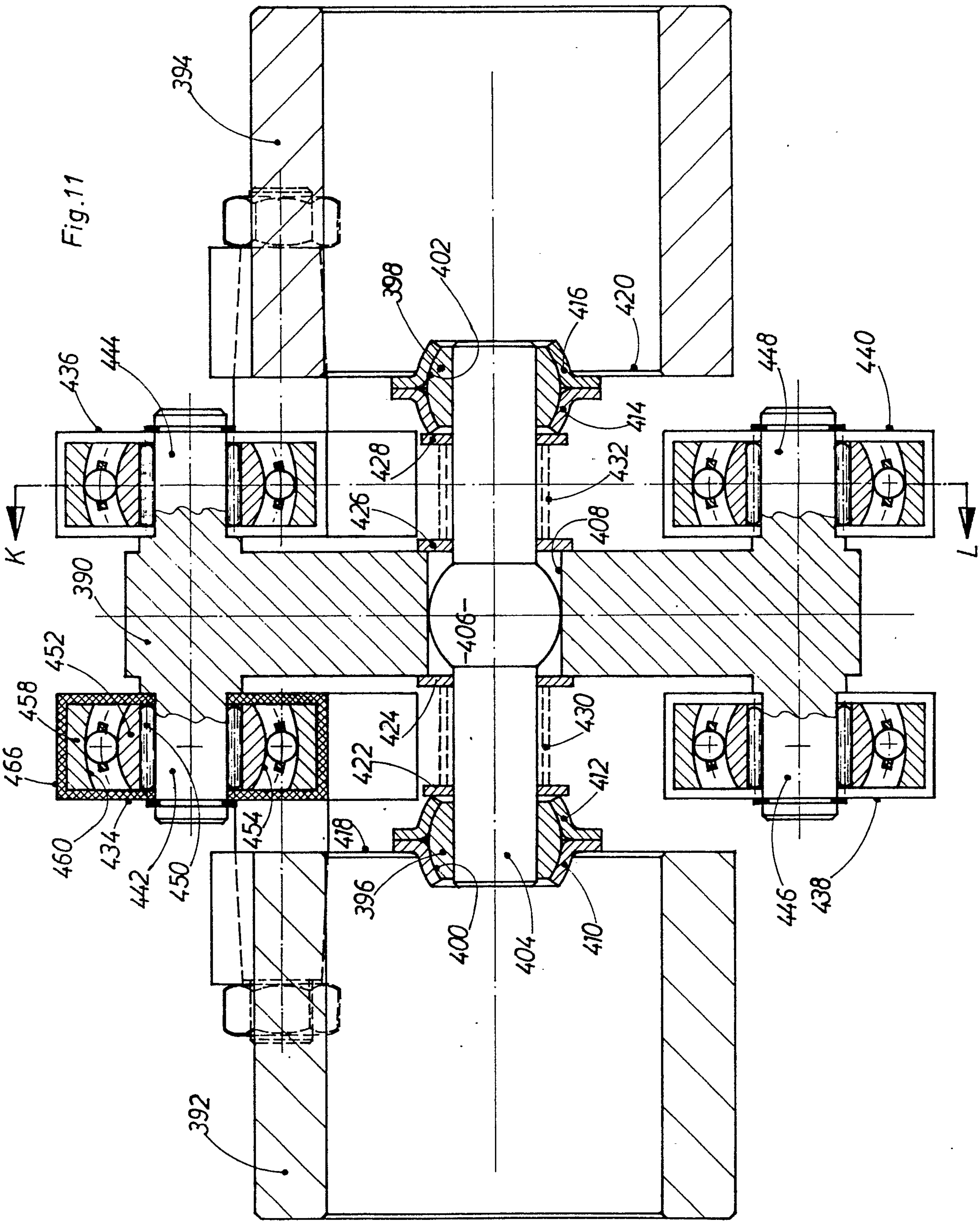
394
398
402
416
420
436
444
448
440
428
432
426
408
K
L
390
406
452
458
466
424
430
422
412
418
460
434
454
442
450
396
400
404
410
446
438
392

Fig.12

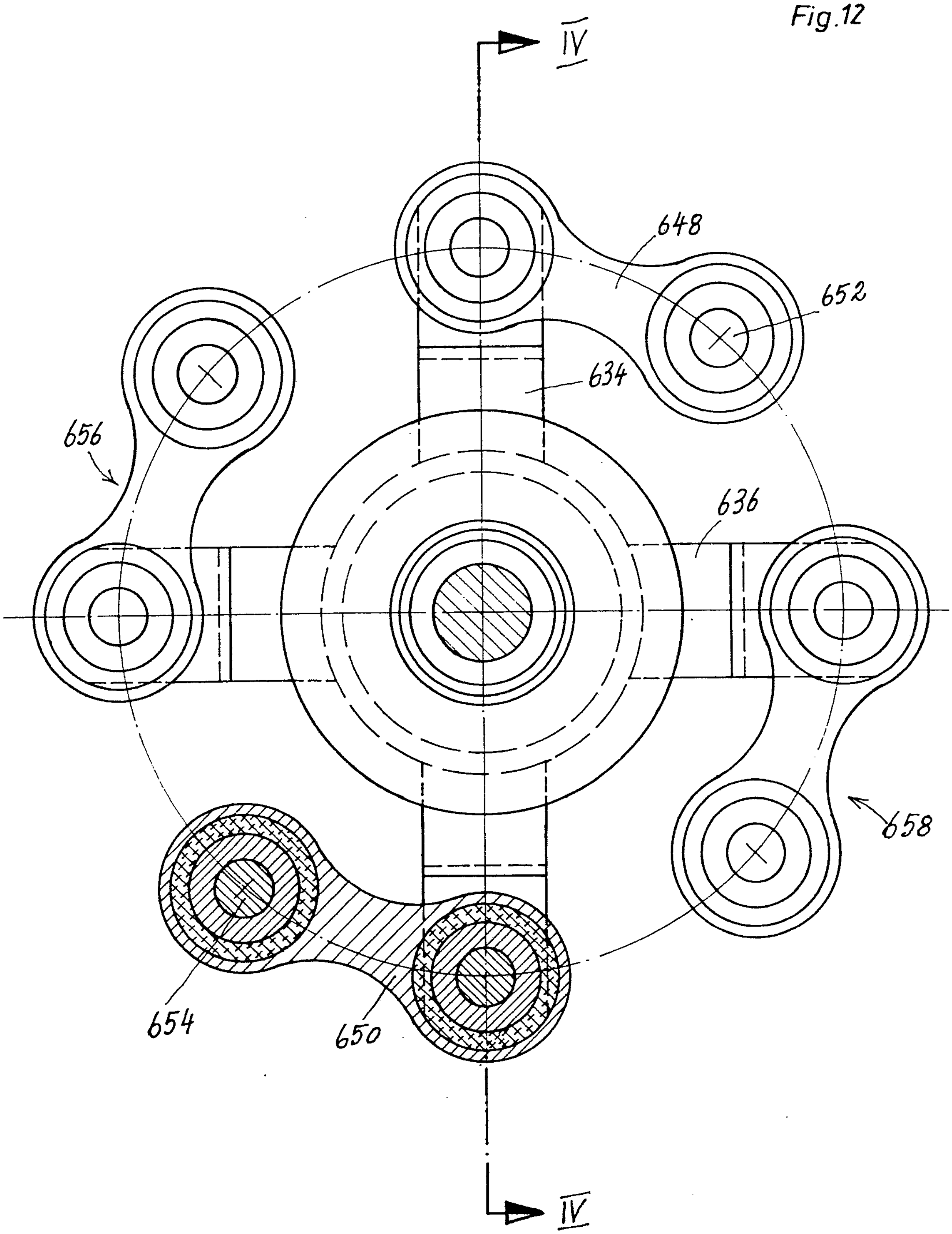

Fig.13